# EUROPEAN PATENT APPLICATION

(11) **EP 4 503 568 A1**
(43) Date of publication of application: **05.02.2025**
(21) Application number: 23844989.6
(22) Date of filing: 15.05.2023
(51) Int. Cl.: H04L 51/046

(54) **TRIP SHARING METHOD AND APPARATUS, DEVICE, STORAGE MEDIUM, AND PROGRAM PRODUCT**

(30) Priority: 29.07.2022 CN 202210911087
(71) Applicant: Tencent Technology (Shenzhen) Company Limited, Shenzhen, Guangdong 518057 (CN)
(72) Inventor: DIAO, Peng, Shenzhen, Guangdong 518057 (CN); TANG, Ke, Shenzhen, Guangdong 518057 (CN); DU, Shaobo, Shenzhen, Guangdong 518057 (CN); LI, Shipeng, Shenzhen, Guangdong 518057 (CN); ZHANG, Cong, Shenzhen, Guangdong 518057 (CN); DENG, Di, Shenzhen, Guangdong 518057 (CN); GAO, Xiaodong, Shenzhen, Guangdong 518057 (CN); TAO, Shufang, Shenzhen, Guangdong 518057 (CN); ZHENG, Dongyang, Shenzhen, Guangdong 518057 (CN)
(74) Representative: Reddie & Grose LLP
(86) International application number: PCT/CN2023/094225
(87) International publication number: WO 2024/021774

(57) **Abstract**

The present application relates to the technical field of computers and the Internet, and discloses a trip sharing method and apparatus, a device, a storage medium, and a program product. The method comprises: in a display interface of a social application, displaying sharing information of a first trip created in an applet by using a first user account (210); in response to a viewing operation for the sharing information, sending a trip display instruction to the applet by means of the social application (220); if the applet determines, according to the trip display instruction, that a second user account has the right to participate in the first trip, displaying a trip detail interface of the applet (230); and in response to an operation for a trip participation control, displaying a trip confirmation interface of the applet (240). The present application can be applied to trip creation, sharing and participation in the field of maps, the field of traffic, and scenarios such as mounting to vehicles. The present application enriches the way to share a trip, and ensures the security of trip detail information.

## Description

### RELATED APPLICATION

This application claims priority to Chinese Patent Application No. 202210911087.2, entitled "TRIP SHARING METHOD AND APPARATUS, DEVICE, STORAGE MEDIUM, AND PROGRAM PRODUCT" filed on July 29, 2022.

### FIELD OF THE TECHNOLOGY

This application relates to the field of computer and Internet technologies, and in particular, to an information sharing method and apparatus, a device, a storage medium, and a program product.

### BACKGROUND OF THE DISCLOSURE

With the development of Internet technologies, users can implement functions such as trip initiation, response, and sharing through some travel applications.

In the related art, a user can share a matched trip with a contact in a social application, so that the contact can view related information of the trip, such as viewing a real-time position of the user, starting and end locations of the trip, and other information.

However, currently, the information sharing manner is undiversified with low security.

### SUMMARY

Embodiments of this application provide an information sharing method and apparatus, a device, a storage medium, and a program product. The technical solutions are as follows:
According to one aspect of the embodiments of this application, an information sharing method is provided, the method being executable by a second terminal device, and a social application configured to be run based on an operating system installed in the second terminal device, and a mini program running based on the social application; the method including:
displaying, in a display interface of the social application, shared information of a first trip created by a first user account in the mini program, the first trip being a trip created by a car owner and waiting for participation by a passenger or a trip created by a passenger and waiting for participation by a car owner, and the first trip being shared by the first user account with a second user account based on a relationship chain in the social application;
transmitting a trip presentation instruction to the mini program through the social application in response to a viewing operation for the shared information;
displaying a trip details interface of the mini program in response to that the mini program determines, after receiving the trip presentation instruction, that the second user account has permission to participate in the first trip, the trip details interface displaying detailed information and a trip participation control of the first trip, and the second user account having permission to participate in the first trip being determined in response to that the second user account has an identity tag matching an identity tag of the first user account; and
displaying a trip confirmation interface of the mini program in response to an operation for the trip participation control, the trip confirmation interface displaying trip information of the participated first trip.

According to one aspect of the embodiments of this application, an information sharing method is provided, the method being executable by backend servers, and the backend servers including a server of a social application configured to be run based on an operating system installed in a terminal device, and a server of a mini program running based on the social application; the method including:
receiving, by the server of the social application, an information sharing request transmitted by a social application of a first terminal device, the information sharing request being used for requesting to share, based on a relationship chain in the social application, a first trip created by a first user account corresponding to the first terminal device in the mini program, and the first trip being a trip created by a car owner and waiting for participation by a passenger or a trip created by a passenger and waiting for participation by a car owner;
transmitting, by the server of the social application, shared information of the first trip to a social application of a second terminal device according to the information sharing request, the second terminal device corresponding to a second user account, and the second user account being determined based on the relationship chain in the social application;
receiving, by the server of the mini program, a trip viewing request transmitted by a mini program of the second terminal device, the trip viewing request indicating that the second user account requests to view detailed information of the first trip; and
transmitting, by the server of the mini program, the detailed information of the first trip to the mini program of the second terminal device in response to that the second user account has an identity tag matching an identity tag of the first user account, the second user account that has the identity tag matching the identity tag of the first user account having permission to participate in the first trip.

According to one aspect of the embodiments of this application, an information sharing method is provided, the method being executable by a first terminal device, and a social application being configured to be run based on an operating system installed in the first terminal device, and a mini program running based on the social application; the method including:
displaying a trip creation interface of the mini program through the social application;
displaying, through the mini program in response to an operation for the trip creation interface, a first trip created by a first user account, the first trip being a trip created by a car owner and waiting for participation by a passenger or a trip created by a passenger and waiting for participation by a car owner;
in response to a sharing operation for the first trip, generating shared information of the first trip through the mini program, and providing the shared information of the first trip to the social application; and
transmitting the shared information of the first trip to a second user account through the social application based on a relationship chain in the social application, the second user account having an identity tag matching an identity tag of the first user account and permission to participate in the first trip.

According to one aspect of the embodiments of this application, an information sharing apparatus is provided, including:
a shared information display module, configured to display, in a display interface of a social application, shared information of a first trip created by a first user account in a mini program, the first trip being a trip created by a car owner and waiting for participation by a passenger or a trip created by a passenger and waiting for participation by a car owner, and the first trip being shared by the first user account with a second user account based on a relationship chain in the social application;
a presentation instruction sending module, configured to transmit a trip presentation instruction to the mini program through the social application in response to a viewing operation for the shared information;
a detailed information display module, configured to display a trip details interface of the mini program in response to that the mini program determines, according to the trip presentation instruction, that the second user account has permission to participate in the first trip, the trip details interface displaying detailed information and a trip participation control of the first trip, the second user account having the permission to participate in the first trip being determined in response that the second user account has an identity tag matching an identity tag of the first user account; and
a confirmation interface display module, configured to display a trip confirmation interface of the mini program in response to an operation for the trip participation control, the trip confirmation interface displaying trip information of the participated first trip.

According to one aspect of the embodiments of this application, information sharing apparatus is provided, including:
a sharing request receiving module, configured to receive, through a server of a social application, an information sharing request transmitted by a social application of a first terminal device, the information sharing request being used for requesting to share, based on a relationship chain in the social application, a first trip created by a first user account corresponding to the first terminal device in a mini program, and the first trip being a trip created by a car owner and waiting for participation by a passenger or a trip created by a passenger and waiting for participation by a car owner;
a shared information sending module, configured to transmit, through the server of the social application, shared information of the first trip to a social application of a second terminal device according to the information sharing request, the second terminal device corresponding to a second user account, and the second user account being determined based on the relationship chain in the social application;
a viewing request receiving module, configured to receive, through a server of the mini program, a trip viewing request transmitted by a mini program of the second terminal device, the trip viewing request indicating that the second user account requests to view detailed information of the first trip; and
a detailed information sending module, configured to transmit, through the server of the mini program, the detailed information of the first trip to the mini program of the second terminal device in response that the second user account has an identity tag matching an identity tag of the first user account, the second user account that has the identity tag matching the identity tag of the first user account having permission to participate in the first trip.

According to one aspect of the embodiments of this application, an information sharing apparatus is provided, including:
a creation interface display module, configured to display a trip creation interface of a mini program through a social application;
a first information display module, configured to display, through the mini program in response to an operation for the trip creation interface, a first trip created by a first user account, the first trip being a trip created by a car owner and waiting for participation by a passenger or a trip created by a passenger and waiting for participation by a car owner;
a shared information generation module, configured to: in response to a sharing operation for the first trip, generate shared information of the first trip through the mini program, and provide the shared information of the first trip to the social application; and
a first information sharing module, configured to transmit the shared information of the first trip to a second user account through the social application based on a relationship chain in the social application, the second user account having an identity tag matching an identity tag of the first user account and permission to participate in the first trip.

According to one aspect of the embodiments of this application, a computer device is provided, including a processor and a memory, the memory storing at least one a computer program, the computer program being loaded and executed by the processor to implement the information sharing method according to any one of the foregoing aspects.

According to one aspect of the embodiments of this application, a computer-readable medium is provided, storing a computer program, the computer program being loaded and executed by a processor to implement the information sharing method according to any one of the foregoing aspects.

According to one aspect of the embodiments of this application, a computer program product is provided, including a computer program, the computer program being loaded and executed by a processor to implement the information sharing method according to any one of the foregoing aspects.

The technical solutions provided in the embodiments of this application can have the following beneficial effects:
On the one hand, a first user can share, with at least one second user based on a relationship chain in a social application, a trip waiting for joint participation by other persons. The second user can view detailed information of the trip according to the shared information and determine whether to participate in the trip. In this way, sharing of information of a to-be-matched trip is achieved in the social application, so that a contact in the relationship chain in the social application can participate in the trip based on the shared information. Compared with the related art in which information of a matched trip (that is, a trip whose participant has been determined) is shared, this method achieves sharing of information of a to-be-matched trip (that is, a trip waiting for joining by a participant) in a social application, thereby enriching information sharing manners.

On the other hand, for the second user that receives the shared information of the trip, the second user has permission to participate in the trip and view detailed information of the trip only when the second user has an identity tag matching an identity tag of the first user. In other words, the second user has no permission to participate in the trip and has no permission to view detailed information of the trip when the second user does not have an identity tag matching an identity tag of the first user. Through such a method, a user that can view detailed information of a trip is sifted out, helping avoid the disclosure of detailed trip information of the user. In this way, security of the detailed trip information is ensured and individual privacy security of the user is improved.

### BRIEF DESCRIPTION OF THE DRAWINGS

FIG. 1 is a schematic diagram of a solution implementation environment according to an embodiment of this application.
FIG. 2 is a flowchart of an information sharing method according to an embodiment of this application.
FIG. 3 is a schematic interface diagram of a trip creation and sharing process according to an embodiment of this application.
FIG. 4 is a schematic interface diagram of an information sharing and viewing process according to an embodiment of this application.
FIG. 5 is a flowchart of an information sharing method according to another embodiment of this application.
FIG. 6 is a schematic interface diagram of a trip participation process according to an embodiment of this application.
FIG. 7 is an interaction flowchart of an information sharing method according to another embodiment of this application.
FIG. 8 is a schematic interface diagram of trip recording according to an embodiment of this application.
FIG. 9 is a schematic interface diagram of a home interface according to an embodiment of this application.
FIG. 10 is a technical flowchart of sharing a trip card according to an embodiment of this application.
FIG. 11 is a technical flowchart of trip viewing and participation according to an embodiment of this application.
FIG. 12 is a technical flowchart of an identity matching process according to an embodiment of this application.
FIG. 13 is a block diagram of an information sharing apparatus according to an embodiment of this application.
FIG. 14 is a block diagram of an information sharing apparatus according to another embodiment of this application.
FIG. 15 is a block diagram of an information sharing apparatus according to another embodiment of this application.
FIG. 16 is a structural block diagram of a computer device according to an embodiment of this application.

### DESCRIPTION OF EMBODIMENTS

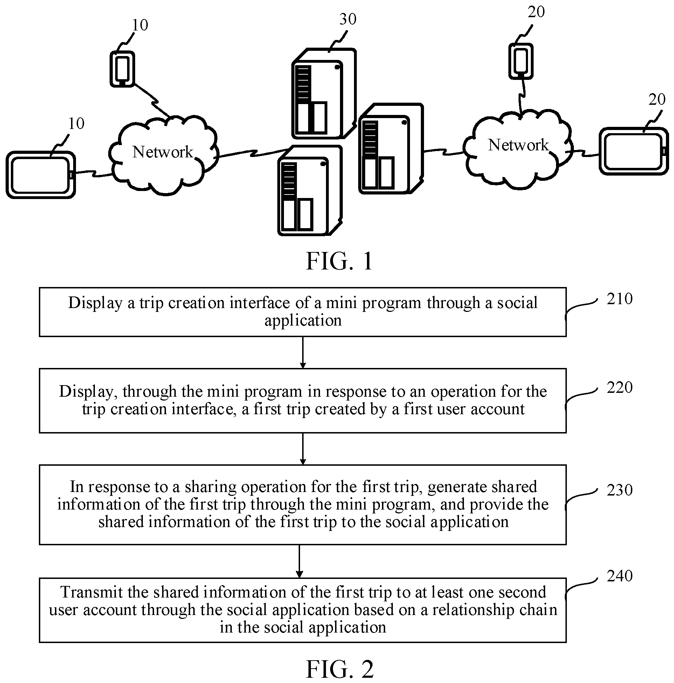

Referring to FIG. 1, FIG. 1 is a schematic diagram of a solution implementation environment according to an embodiment of this application. The solution implementation environment may be implemented as a trip information sharing system. The solution implementation environment may include a passenger terminal 10, a car owner terminal 20, and a server 30.

The passenger terminal 10 is a terminal device used by a passenger. The car owner terminal 20 is a terminal device used by a car owner. The terminal device may be a device such as a mobile phone, a tablet computer, a wearable device, or an in-vehicle terminal. This is not limited in this application.

In some embodiments, a target application is run in either the passenger terminal 10 or the car owner terminal 20 (which may be briefly referred to as "a terminal device"). The target application is used for implementing a function such as trip creation, trip participation, or trip information sharing involved in this application. For example, the target application may be a travel application, a social application, or another type of application. This is not limited in this application.

In some embodiments, a first application and a second application are run in either the passenger terminal 10 or the car owner terminal 20 (which may be briefly referred to as "a terminal device"). The first application may be a travel application (or an application providing a travel-related function), used for implementing trip creation and trip participation and other related functions. The second application may be a social application, used for implementing trip information sharing in a social relationship chain of a user. The first application and the second application may be two independent applications. Alternatively, the first application and the second application may be applications having a dependency relationship. For example, the first application depends on the second application to run. In other words, the second application serves as a parent application, and the first application is a sub-application running depending on the parent application. For example, the second application is a social application, and the first application is a mini program in the social application. Certainly, in the embodiments of this application, a specific implementation of the first application is not limited. The first application may be an application that is independently installed and run; or may be an application that needs to depend on another application to run, such as a mini program; or may be a web page application, another form of application, or the like. In addition, a specific implementation of the second application is also not limited in this application. For example, the second application may be an application that is independently installed or run; or may be a web page application, another form of application, or the like.

The server 30 may be an independent physical server, or may be a server cluster or distributed system including a plurality of physical servers, or may be a cloud server providing cloud computing services. The passenger terminal 10 and the car owner terminal 20 can communicate with the server 30 separately. The server 30 is configured to provide backend services for the passenger terminal 10 and the car owner terminal 20.

In some embodiments, the server 30 includes a server corresponding to the first application and a server of the second application. The server corresponding to the first application is configured to provide a backend service for the first application, and cooperate with the first application to implement functions such as trip creation and trip participation. The server corresponding to the second application is configured to provide a backend service for the second application, and cooperate with the second application to implement functions such as information sharing and chat session message forwarding. In some embodiments, the server corresponding to the first application and the server corresponding to the second application may be the same server or the same group of servers. That is, functions of the server corresponding to the first application and the server corresponding to the second application are integrated in the same server or the same group of servers. In some embodiments, alternatively, the server corresponding to the first application and the server corresponding to the second application may be two different servers or two groups of different servers. One server or one group of servers are configured to implement the function of the server corresponding to the first application, and the other server or the other group of servers are configured to implement the function of the server corresponding to the second application. In addition, information can be exchanged between the server corresponding to the first application and the server corresponding to the second application. For example, the server corresponding to the first application and the server corresponding to the second application exchange information such as shared information of a trip or a viewing request of a trip.

In some embodiments, a first client runs in the passenger terminal 10, and a second client runs in the car owner terminal 20. Alternatively, a second client runs in the passenger terminal 10, and a first client runs in the car owner terminal 20. In some embodiments, the first client and the second client are each the target application, or the first client and the second client are each the first application, or the first client and the second client are each the second application, or the first client and the second client are each a combination of the first application and the second application. The server 30 may provide a communication service for the first client and the second client through a network.

In a method embodiment below, the first terminal device is used as a trip creator and an information sharing initiator, and the second terminal device is used as an information sharing receiver. The first terminal device may also be referred to as an initiator terminal device, briefly referred to as an initiator terminal. The second terminal device may also be referred to as a shared-party terminal device, briefly referred to as a shared-party terminal. In addition, in the method embodiment below, as an example, mainly, the first application is a mini program and the second application is a social application. The mini program runs based on the social application. A social application and a mini program running based on the social application run in the first terminal device. Similarly, a social application and a mini program running based on the social application are also run in the second terminal device. Correspondingly, backend servers may include a server of the social application and a server of the mini program.

The mini program is an application usable without being downloaded and installed. The mini program may run dependent on a parent application (such as the social application). That the mini program runs depending on a parent application means that the mini program cannot run directly in an operating system, but runs in an environment provided by the parent application. That is, the mini program cannot run independently, but needs to run depending on the parent application. The parent application obtains a logic code file of the mini program, parses the logic code file, and then displays a interface of the mini program. The mini program cannot run independently, but can be used without being downloaded and installed. A user can directly open the mini program by scanning a two-dimensional code corresponding to the mini program or searching for a name of the mini program. The mini program can be easily obtained and distributed within the parent application. The parent application is an application used for hosting the mini program, and provides an environment for implementing the mini program. The parent application is a native application. The native application is an application that can be directly run in the OS. The parent application may be a social application, a dedicated application specially supporting a mini application, a file management application, an email application, or the like. The social application includes, but is not limited to, an instant messaging application, a social network service (SNS) application, a livestreaming application, or the like.

Referring to FIG. 2, FIG. 2 is a flowchart of an information sharing method according to an embodiment of this application. The method may be performed by a terminal device. For example, the terminal device may be a first terminal device (or referred to as an initiator terminal). The initiator terminal corresponds to a first user account. A social application and a mini program running based on the social application are run in the initiator terminal. The method may include at least one of the following steps 210 to 240:
Step 210: Display a trip creation interface of a mini program through a social application.

The trip creation interface is a user interface for creating a trip. The trip refers to a distance traveled by a user from a departure location to a destination in a particular transportation manner. A first user creates and publishes a trip, so that another user can participate in and complete the trip together with the first user. In some embodiments, creating a trip may be understood as creating a trip order. The trip order can be recorded by a server and participated and executed by a plurality of users jointly.

The first user may select or fill in information required for creating the trip in the trip creation interface. The first user refers to a user owning the first user account, or a user using the initiator terminal.

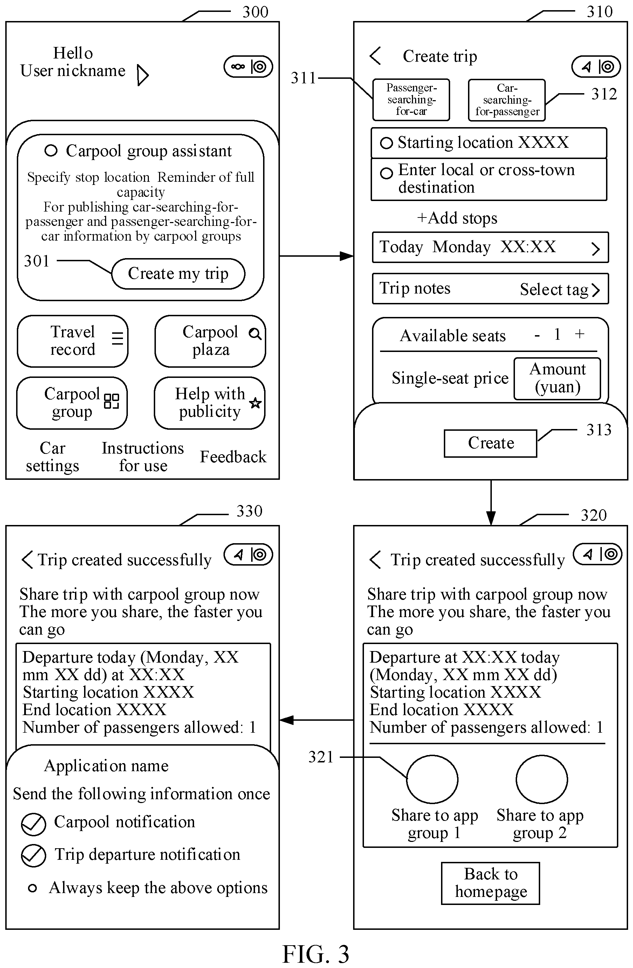

Referring to FIG. 3, FIG. 3 is an example schematic diagram of the first user creating and sharing a trip. The first user opens a mini program named "carpool group assistant" in the social application. A home interface 300 displayed in the mini program displays a trip creation prompt icon 301, and clicking/tapping the trip creation prompt icon 301 can enter a trip creation interface 310. The first user may fill in corresponding information in the trip creation interface 310 on self-demand.

Step 220: Display, through the mini program in response to an operation for the trip creation interface, a first trip created by a first user account, the first trip being a trip created by a car owner and waiting for participation by a passenger or a trip created by a passenger and waiting for participation by a car owner.

The operation for the trip creation interface refers to an operation used for creating a trip and performed by the first user according to the trip creation interface. For example, the first user may select or fill in information required for creating the trip in the trip creation interface, and then triggers a trip creation instruction. The initiator terminal creates the first trip according to the information after receiving the trip creation instruction.

If the first user is a passenger (or the first user account is a passenger account), the trip creation scenario is a passenger-for-car situation. The first user may select or fill in, in the trip creation interface, a departure location, a destination, an estimated departure time, whether to accept carpooling, and other information, and then triggers the trip creation instruction. If the first user is a car owner (or the first user account is a car owner account), the trip creation scenario is a car-for-passenger situation. The first user may select or fill in, in the trip creation interface, a departure location, a destination, an estimated departure time, the number of available seats, a single-seat price, and other information, and then triggers the trip creation instruction.

After receiving the trip creation instruction, the mini program of the initiator terminal may transmit a trip creation request to a server of the mini program. In some embodiments, the trip creation request includes the information required for creating a trip. The server of the mini program creates a first trip according to the trip creation request, and transmits a trip creation response to the mini program of the initiator terminal. After receiving the trip creation response, the mini program of the initiator terminal displays the created first trip. For example, the mini program displays trip information of the first trip. For example, in the passenger-for-car situation, the displayed trip information of the first trip may include a departure time, a starting location, an arrival location, the number of carpool takers, and other information. In the car-for-passenger situation, the displayed trip information of the first trip may include a departure time, a starting location, an arrival location, the number of remaining seats, and other information.

In some embodiments, the first trip refers to a trip participated by a plurality of users jointly. The first trip is referred to as a target trip or another name. This is not limited herein in this application.

In some embodiments, the first trip is jointly participated by the first user and another user in a relationship chain of the first user. For example, the first user is a passenger, and after the first user creates a first trip of passenger-for-car, a car owner having a similar trip chooses to participate in the first trip created by the first user. For another example, the first user is a car owner, and after the first user creates a first trip of car-for-passenger, at least one passenger may choose to join the first trip of the car owner.

For example, with reference to FIG. 3, the first user selects a car-for-passenger icon 311 or a passenger-for-car icon 312 in the trip creation interface 310 according to a current requirement, and selects a trip creation situation. FIG. 3 shows a car-for-passenger situation. The first user may fill in, in the trip creation interface 310, a departure location, a destination, an estimated departure time, the number of available seats, a single-seat price, and other trip-related information, and click/tap a create icon 313 to enter a creation success interface 320. The creation success interface 320 displays the previously filled information related to the first trip and an information sharing icon 321. The first user shares the created first trip to one or more social application through the information sharing icon 321. In addition, a first message prompt interface 330 pops up after the trip is successfully created. If the first user choose to agree to receive a message prompt, when the first trip is successfully responded and a subsequent trip is to depart, the mini program or the social application sends out a message reminder.

Step 230: In response to a sharing operation for the first trip, generate shared information of the first trip through the mini program, and provide the shared information of the first trip to the social application.

The sharing operation for the first trip refers to an operation used for sharing the first trip and performed by the first user. In some embodiments, previously, the mini program generates the shared information of the first trip. The mini program transmits an information sharing instruction to the social application in response to the sharing operation, the information sharing instruction including the shared information of the first trip. The social application displays a sharing object interface according to the information sharing instruction. The sharing object interface includes all user accounts having social connections with the first user in the social application and all social groups that the first user has joined. The first user may select one or more objects (that is, second users with second user accounts) from sharing object to share information about the first trip. For example, the first user may choose to share the first trip with one or more users or one or more groups in the social application.

Step 240: Transmit the shared information of the first trip to at least one second user account through the social application based on a relationship chain in the social application, a target second user account that has an identity tag matching an identity tag of the first user account in the at least one second user account having permission to participate in the first trip.

The second user account refers to a user account having a social connection with the first user account in the social application. The social connection may be any form of relationship chain such as the first and second user account being friends with each other, belonging to the same group, or being separated by a particular distance. This is not limited in this application. The second user account is a member of the relationship chain of the first user account in the social application. For example, when the first user shares the first trip to a separate session in the social application, the second user account includes at least one of the following: a friend of the first user account, any member in a group chat of the first user account, any account within a particular distance nearby, or the like. For another example, when the first user shares the first trip to a group chat in the social application, the second user account refers to all members in the group. In some embodiments, the second user account is specified by the first user. For example, when the first user performs the sharing operation, the first terminal device determines at least one shared user from the relationship chain of the first user in response to an object selection operation of the first user. Each shared user corresponds to a second user account.

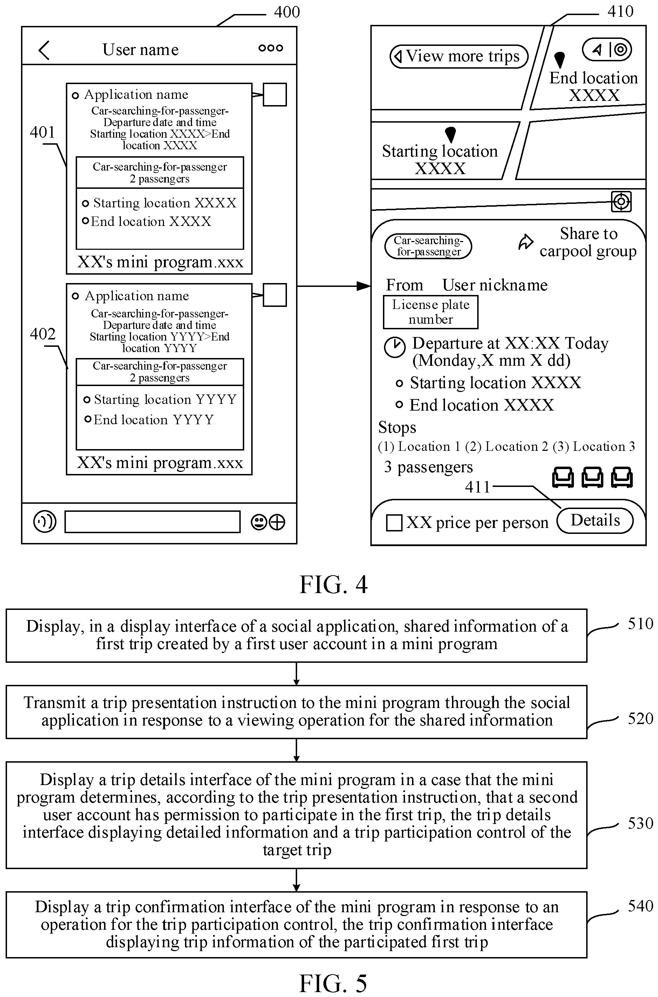

For example, with reference to FIG. 4, a car-for-passenger trip card 401 and a passenger-for-car trip card 402 shared by a first user with a second user are displayed in a chat session interface 400 of the social application. After the second user receives the shared information of the first trip, the car-for-passenger trip card 401 and the passenger-for-car trip card 402 are also displayed. The second user may click/tap on the car-for-passenger trip card 401 to trigger displaying of a first trip information interface 410. The interface displays partial information of the first trip. In a case that the second user is a target second user, when the second user clicks/taps on the car-for-passenger trip card 401 or a details icon 411, displaying of detailed information of the first trip is triggered. The second user may determine, according to the detailed information, whether to participate in the first trip.

After the first user account shares the first trip created thereby with at least one second user account, only a target second user account in the at least one second user account has permission to participate in the first trip. In some embodiments, the second user account has permission to participate in the first trip refers to that the second user account has an identity tag matching that of the first user account. In a case that the second user account has an identity tag matching that of the first user account, the second user account is determined to have the permission to participate in the first trip. The target second user account is any second user account in the at least one second user account. In some embodiments, the target second user account refers to all second user accounts.

The target second user account refers to a second user account that has an identity tag matching an identity tag of the first user account. In some embodiments, an identity tag of a user account refers to information reflecting attribute features of a user corresponding to the user account, and is used for determining a degree of association and a matching degree between user accounts (or users). For example, the identity tag of the user account includes, but is not limited to, at least one of the following: a community tag, an employer tag, a school tag, a friend tag, a relatives tag, an interest tag, an age tag, a gender tag, and the like. The community tag is used for indicating a geographic community to which the user belongs.

That the identity tag of the target second user account matches the identity tag of the first user account means that the target second user account has at least one same identity tag as or highly similar identity tag to the first user account. For example, the target second user account has the same community tag as the first user account same, or two respectively corresponding community tags are in the same subdistrict and a distance between communities is less than a distance threshold.

In some embodiments, the target second user account has permission to view and participate in the first trip, while other second user accounts have no permission to participate in the first trip. For example, other second user accounts can only learn, from shared information of the first user account, that the first user account is initiating a first trip, but cannot view other information about the first trip. For another example, other second user accounts can view brief information of the first trip, referring to the first trip information interface 410 FIG. 4, but have no permission to view detailed information of the first trip. For another example, other second user accounts have permission to view detailed information of the first trip, but do not have the same permission to participate in the first trip as the target second user account.

In some embodiments, the initiator terminal displays a user interface related to a second group in the social application; displays the trip creation interface of the mini program in response to a mini-program opening operation initiated in the user interface related to the second group; and displays, through the mini program in response to an operation for the trip creation interface, a first trip created by the first user account, a user account that belongs to the second group having permission to participate in the first trip, and a user account that does not belong to the second group having no permission to participate in the first trip.

The second group may be any group in the social application, and the first user account has joined the second group and can view an interface related to the second group. The user interface related to the second group may be a chat session interface, a function menu interface, a group information presentation interface, or the like of the second group. This is not limited in this application. For example, the chat session interface of the second group displays a link message related to the mini program, or the function menu interface or the group information presentation interface of the second group displays a program icon related to the mini program. The first user may click/tap on the link message or the program icon to open the mini program, and trigger displaying of the trip creation interface of the mini program. In some embodiments, the trip creation interface is directly displayed after the mini program is opened. In some embodiments, a home interface is displayed after the mini program is opened, and the first user triggers opening of the trip creation interface after performing some operations in the mini program. Further, the first user may create a first trip in the trip creation interface. The first trip is similar to the first trip described above, and details are not described herein again. The first trip created in the foregoing manner may be considered as a trip created by the first user in the second group. For the trip created by the first user in the second group, only a user account that belongs to the second group has permission to participate, and a user account that does not belong to the second group has no permission to participate. Through the foregoing manner, the association between participation permission and group tags is achieved, and if a user needs to create a trip in which only a user in a particular group has permission to participate, the user only needs to simply open a mini program in the group and then create the corresponding trip. The operation is simple and efficient.

To sum up, on the one hand, a first user can share, with at least one second user based on a relationship chain in a social application, a trip waiting for joint participation by other persons. The second user can view detailed information of the trip according to the shared information and determine whether to participate in the trip. In this way, sharing of a to-be-matched trip is achieved in the social application, so that a contact in the relationship chain in the social application can participate in the trip based on the shared information. Compared with the related art in which a matched trip (that is, a trip whose participant has been determined) is shared, this method achieves sharing of a to-be-matched trip (that is, a trip waiting for joining by a participant) in a social application, thereby enriching information sharing manners. On the other hand, for the second user that receives the shared information of the trip, the second user has permission to participate in the trip and view detailed information of the trip only when the second user has an identity tag matching an identity tag of the first user. In other words, the second user has no permission to participate in the trip and has no permission to view detailed information of the trip when the second user does not have an identity tag matching an identity tag of the first user. In this way, security of the trip detailed information is ensured and individual privacy security of the user is improved.

In addition, through setting an identity tag for a user account, a user account that has an identity tag matching an identity tag of the first user account in second user accounts is sifted out as a target second user account, and the target second user account is granted permission to view and participate in the first trip created by the first user account. Therefore, this can avoid a problem that other user accounts participate in the first trip without really having the same travel needs, and help reduce the disclosure of detailed information of the trip, so that both the first user and the second user can achieve true mutual aid in traveling without detouring.

Referring to FIG. 5, FIG. 5 is a flowchart of an information sharing method according to another embodiment of this application. The method may be performed by a terminal device. For example, the terminal device may be a second terminal device (or referred to as a shared-party terminal). The shared-party terminal corresponds to a second user account. A social application and a mini program running based on the social application are run in the shared-party terminal. The method may include at least one of the following steps 510 to 540:

Step 510: Display, in a display interface of a social application, shared information of a first trip created by a first user account in a mini program, the first trip being a trip created by a car owner and waiting for participation by a passenger or a trip created by a passenger and waiting for participation by a car owner, and the first trip being shared by the first user account with at least one second user account based on a relationship chain in the social application.

The shared-party terminal receives information of a first trip shared by an initiator terminal, the first trip being created by the first user account in the mini program. A display interface of the social application of the shared-party terminal displays shared information of the first trip. The first trip refers to a trip participated by a plurality of users jointly. In some embodiments, the shared-party terminal displays the shared information of the first trip in a form of a card. For example, the shared-party terminal displays a first trip card, and the first trip card displays the shared information of the first trip.

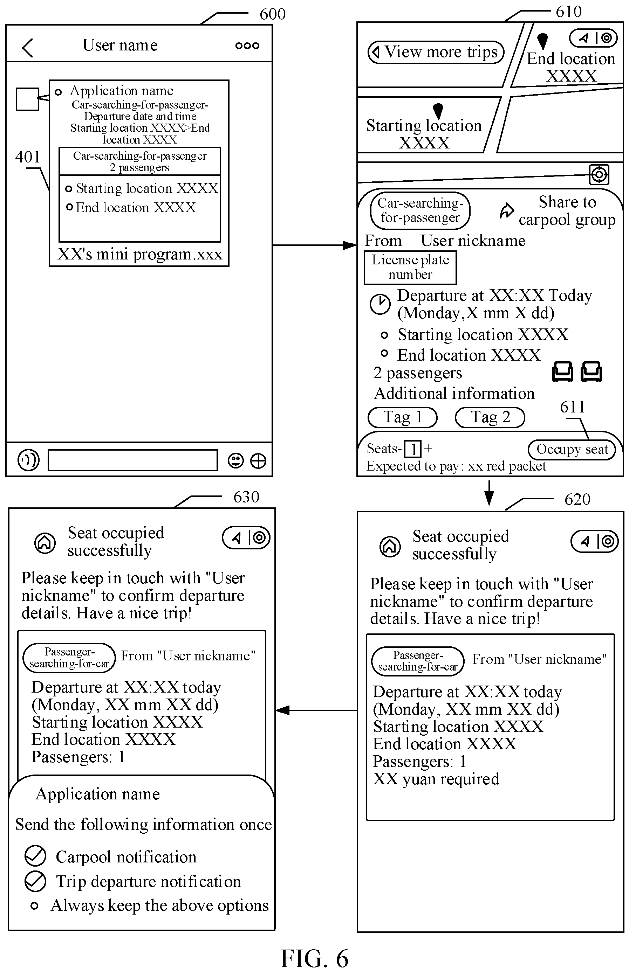

In some embodiments, the shared information of the first trip includes summary information of the first trip, but does not include detailed information of the first trip. For example, referring to FIG. 6, a car-for-passenger trip card 401 shared by the initiator terminal with the shared-party terminal is displayed in a chat session interface 600 of the social application. The car-for-passenger trip card 401 displays a departure location, a destination, an estimated departure time, the number of available seats, and other shared information of the first trip. A second user can learn of information related to the first trip according to the car-for-passenger trip card 401. The second user refers to a user owning the second user account, or a user using the shared-party terminal.

In some embodiments, after step 510, the method further includes the following steps: receiving, through the social application, updated shared information of the first trip transmitted by a server of the social application, the updated shared information of the first trip being provided by a server of the mini program to the server of the social application, and the updated shared information of the first trip including updated trip data of the first trip; and displaying the updated shared information of the first trip in the display interface of the social application.

The updated trip data of the first trip may be provided by the server of the mini program to the server of the social application. The shared-party terminal may receive the updated trip data through the server of the social application, and display the updated trip data in an interface of the social application of the shared-party terminal. Through the foregoing manner, the shared information of the first trip displayed in the social application can be updated in a timely manner, so that a user can view the latest shared information related to the first trip in the social application.

Step 520: Transmit a trip presentation instruction to the mini program through the social application in response to a viewing operation for the shared information.

The viewing operation for the shared information is an operation performed by the second user for viewing received detailed information of the first trip. Before performing the viewing operation, the second user may transmit the trip presentation instruction to the mini program through the social application. The trip presentation instruction is used for instructing to present the detailed information of the first trip. The mini program displays the detailed information of the first trip according to the trip presentation instruction.

Step 530: Display a trip details interface of the mini program in a case that the mini program determines, according to the trip presentation instruction, that the second user account has permission to participate in the first trip, the trip details interface displaying detailed information and a trip participation control of the first trip, and a target second user account that has an identity tag matching an identity tag of the first user account in the at least one second user account having permission to participate in the first trip.

The trip details interface of the mini program is displayed in a shared-party terminal of a target second user account (or a target second user) that has an identity tag matching an identity tag of the first user account in the at least one second user account. The trip details interface displays detailed information of the first trip and a trip participation control. If the first user account is a car owner account, it is a car-for-passenger situation, and the detailed information of the first trip may include a departure location, a destination, a stop, an estimated departure time, the number of available seats, the number of occupied seats, a price of each seat, and other information. If the first user account is a passenger account, it is a passenger-for-car situation, and the detailed information of the first trip may include a departure location, a destination, an estimated departure time, whether to accept carpooling, and other information. After viewing the detailed information of the first trip, the second user may choose whether to participate in the first trip through the trip participation control.

In some embodiments, the identity tag includes at least one of the following: a company tag, used for indicating a company to which a user belongs; a community tag, used for indicating a community to which a user belongs; and a group tag, used for indicating a group that a user joins in the social application. That the second user account has an identity tag matching an identity tag of the first user account means that the second user account has at least one same identity tag as the first user account.

The identity tag of the second user account includes one or more of a company tag, a community tag, and a group tag. That the second user account has an identity tag matching an identity tag of the first user account means that the second user account has at least one same identity tag as or highly similar identity tag to the first user account, which may be one or more of the company tag, the community tag, and the group tag, thereby ensuring that the second user account is a user having a strong relationship chain with the first user account.

Step 540: Display a trip confirmation interface of the mini program in response to an operation for the trip participation control, the trip confirmation interface displaying trip information of the participated first trip.

The operation for the trip participation control is an operation performed by the second user and used for choosing to participate in the first trip. For example, if the trip participation control in the trip details interface is clicked/tapped, the shared-party terminal displays the trip confirmation interface of the mini program. The trip confirmation interface includes trip information of a first trip already participated by the second user, and a key for choosing whether to participate in the current first trip.

For example, with reference to FIG. 6, after the second user clicks/taps a car-for-passenger trip card 401 in a chat session interface 600, the shared-party terminal or the server verifies whether the second user has permission to view the detailed information of the first trip. If the second user has the permission, the shared-party terminal displays a details presentation interface 610. The details presentation interface 610 displays the detailed information of the first trip of car-for-passenger. The second user may choose to click/tap on a seat occupancy icon 611 to participate in the first trip.

In some embodiments, step 530 includes the following substeps:
1. Transmit a trip viewing request to a server of the mini program through the mini program, the trip viewing request being used for indicating that the second user account requests to view detailed information of the first trip.
   The second user may click/tap on a trip card in the mini program to view detailed information of the first trip. In this case, the shared-party terminal transmits a trip viewing request to the server of the mini program in response to the viewing operation. The trip viewing request is used for requesting the server to obtain the detailed information of the first trip. In some embodiments, the trip viewing request includes identification information of the first trip and the second user account.
2. Receive, through the mini program, detailed information of the first trip and identity matching related information transmitted by the server of the mini program, the detailed information of the first trip being transmitted in a case that the second user account has an identity tag matching an identity tag of the first user account, and the identity matching related information including at least one of the following: the matching identity tags of the second user account and the first user account, or a matching degree between the identity tags of the second user account and the first user account.

After receiving the trip viewing request, the server of the mini program verifies whether the second user account and the first user account have matching identity tags. If the two have matching identity tags, it indicates that the second user account has permission to view and participate in the first trip, and the server transmits the detailed information of the first trip to the shared-party terminal. If the two do not have matching identity tags, it indicates that the second user account has no permission to view and participate in the first trip, and the server does not transmit the detailed information of the first trip to the shared-party terminal.

In some embodiments, in addition to receiving the detailed information of the first trip transmitted by the server, the shared-party terminal further receives identity matching related information transmitted by the server. The identity matching related information includes at least one of the following: the matching identity tags of the second user account and the first user account, or a matching degree between the identity tags of the second user account and the first user account. The matching identity tags refer to the at least one identity tag owned by the second user account that is the same as or highly similar to the identity tag of the first user account. The matching degree between the identity tags refers to a degree of similarity between the identity tags of the second user account and the first user account. When the similarity degree of identity tags reaches a target similarity value in a particular dimension, it can be determined that the identity tags of the second user account matches the first user account. The dimension may be a temporal interval, a spatial distance, the number of mutual friends, or the like. For example, supposing that the target similarity value is set to 80%, if there are community tags belonging to the same subdistrict in the identity tags of the second user account and the first user account, when a distance between the two communities meets the set required similarity value of 80%, it can be considered that the community tags of the second user account and the first user account match each other. In addition, the detailed information of the first trip and the identity matching related information can be sent together or separately. This is not limited in this application.

3. Display the trip details interface through the mini program, and display the detailed information of the first trip, the trip participation control, and the identity matching related information in the trip details interface.

In a case of receiving the detailed information of the first trip, the shared-party terminal may display the detailed information of the first trip and participate in the first trip through the trip participation control.

In some embodiments, if the shared-party terminal also receives the identity matching related information, the shared-party terminal displays the identity matching related information during the display of the detailed information of the first trip. When the second user clicks/taps the trip card to view the detailed information, the details presentation interface of the first trip may display the matching identity tags of the second user account and the first user account and a matching degree between the identity tags.

For example, when the second user account has the same identity tag as the first user account, the matching degree is displayed as 100%. If the second user account has a highly similar identity tag to the first user account, a degree of similarity of the identity tag in a particular dimension is displayed. A matching identity tag or an identity matching degree is fed back to the shared-party terminal, so that more valuable reference information is provided to the second user during trip selection. For example, the second user may preferentially select a trip with a same or similar community tag for participation, or preferentially select a trip with a same or similar interest tag for participation.

In some embodiments, in response to a participation operation for the first trip, trip confirmation information is transmitted to the server of the mini program through the mini program. The trip confirmation information is used for indicating that the second user account confirms participation in the first trip.

The participation operation for the first trip is an operation performed by the second user (or the target second user having permission to participate in the first trip) and used for transmitting trip confirmation information to confirm participation in the first trip. For example, the second user may trigger a trip participation instruction. After receiving the trip participation instruction, the shared-party terminal may transmit the trip confirmation information to the server of the mini program through the mini program. The server of the mini program stores a binding relationship between the second user account and the first trip according to the trip confirmation information. The establishment of the binding relationship indicates that the second user account has successfully participated in the first trip created by the first user account. In some embodiments, the server of the mini program transmits trip response information to the initiator terminal to inform the first user that the first trip has been participated by someone, and transmits a trip confirmation response to the shared-party terminal to inform the second user that the participation request has been successfully responded to.

For example, with reference to FIG. 6, after the second user clicks/taps on the seat occupancy icon 611 to confirm participation in the first trip, the shared-party terminal displays a seat occupation success interface 620. The seat occupation success interface 620 displays information related to the first trip again for viewing by the second user again. In addition, after the seat occupation is successful, a second message prompt interface 630 pops out. If the second user chooses to agree on receipt of a message prompt, when subsequently the trip is about to depart, the shared-party terminal or the social application sends a message notification to remind the second user of relevant matters.

For the technical effect achieved by the technical solution provided in this embodiment, refer to the description of the embodiment of FIG. 2 above. Details are not described herein again.

In addition, in a case that the second user account has permission to participate in the first trip created by the first user account, a matching identity tag or an identity matching degree is fed back to the shared-party terminal through the server of the mini program, so that more valuable reference information is provided to the second user during trip selection. For example, the second user may preferentially select a trip with a same or similar community tag for participation, or preferentially select a trip with a same or similar interest tag for participation. This helps improve the probability that the trip is subsequently executed successfully after confirmation.

In addition, after the second user account confirms participation in the first trip, the server directly stores the binding relationship between the second user account and the first trip, without inquiring whether the first user account agrees on the participation by the second user account. This simplifies an interaction procedure between devices and improves trip participation efficiency. In this application, only the second user account with the identity tag matching the identity tag of the first user account has permission to view and participate in the first trip. This verification mechanism determines that the second user account that initiates the trip confirmation information is a user having a strong relationship chain with the first user account. Therefore, even though the first user account is no longer inquired whether to agree on the participation by the second user account, a success rate of the trip can be ensured and a requirement of the trip creator can be met.

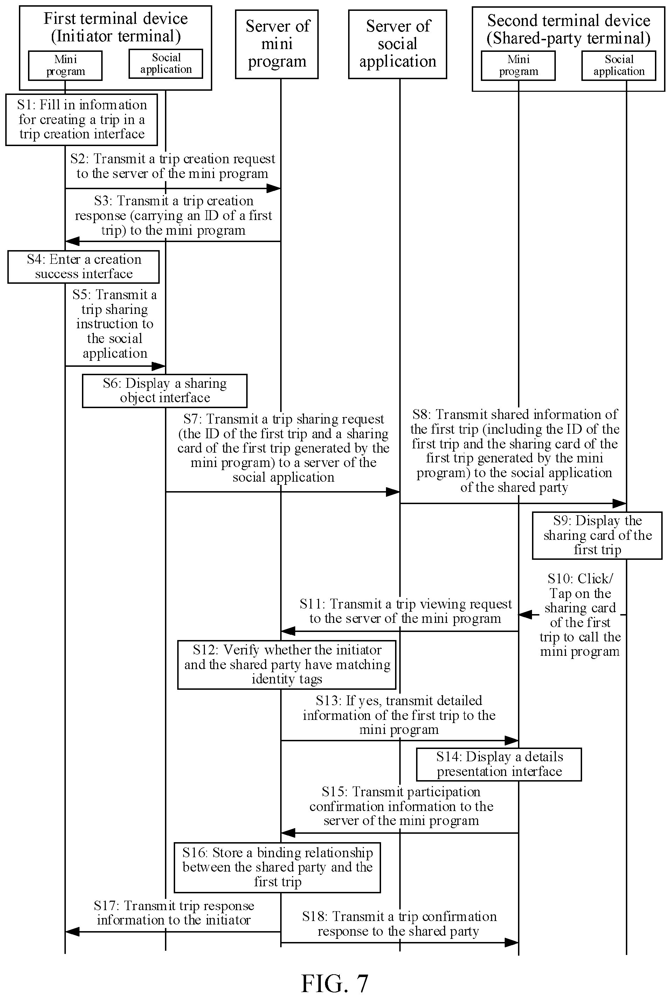

Referring to FIG. 7, FIG. 7 is a flowchart of an information sharing method according to another embodiment of this application. The method may be applied to the solution implementation environment shown in FIG. 1. The method may include at least one of the following steps S1 to S14.

Step S1: A mini program of a first terminal device displays a trip creation interface, the first terminal device being corresponding to a first user account.

In some embodiments, the first user account may be shared between a social application and the mini program of the first terminal device. For example, both the social application and the mini program are logged in with the first user account, or the social application is logged in with the first user account and the mini program is logged in with an account associated with the first user account.

Step S2: The mini program of the first terminal device transmits a trip creation request to a server of the mini program in response to an operation for the trip creation interface.

In some embodiments, the trip creation request is used for requesting to create a trip. The trip creation request may include information required to create the trip, such as a departure time and starting and end locations. After receiving the trip creation request, the server of the mini program creates a first trip according to the information carried in the trip creation request, and assigns an identifier (ID) to the first trip.

Step S3: The server of the mini program transmits a trip creation response to the mini program of the first terminal device and the response carries an ID of a first trip.

Step S4: The mini program of the first terminal device enters a creation success interface, and displays the first trip created by the first user account.

Step S5: The mini program of the first terminal device transmits an information sharing instruction to a social application of the first terminal device in response to a sharing operation for the first trip.

Step S6: The social application of the first terminal device displays a sharing object interface.

A first user selects one or more objects in the sharing object interface to share information about the first trip. For example, the first user may choose to share the first trip with one or more users or one or more groups in the social application.

Step S7: The social application of the first terminal device transmits an information sharing request to a server of the social application, and the request carries the ID of the first trip and a sharing card of the first trip generated by the mini program.

The information sharing request is used for requesting to share, based on a relationship chain in the social application, the first trip created by the first user account corresponding to the first terminal device in the mini program.

The first user may trigger the information sharing instruction by performing the sharing operation for the first trip. After receiving the information sharing instruction, an initiator terminal may transmit the information sharing request to the server of the social application. The information sharing request includes identification information of the first trip and indication information of the sharing object. The indication information of the sharing object may be one or more user accounts, or one or more group accounts, or indication information of a social content publishing platform, or the like.

Step S8: The server of the social application transmits shared information of the first trip, including the ID of the first trip and the sharing card of the first trip generated by the mini program, to a social application of at least one second terminal device according to the information sharing request.

The second terminal device corresponds to a second user account. The second user account is determined based on the relationship chain in the social application. In some embodiments, the second user account may be shared between the social application and a mini program of the second terminal device. For example, both the social application and the mini program are logged in with the second user account, or the social application is logged in with the second user account and the mini program is logged in with an account associated with the second user account.

After receiving the information sharing request, the server of the social application may determine at least one second user account according to the indication information of the sharing object in the information sharing request, and then transmits the shared information of the first trip to at least one shared-party terminal respectively corresponding to the at least one second user account.

Step S9: The social application of the second terminal device displays the shared information of the first trip created by the first user account. In some embodiments, the shared information of the first trip is displayed in a display interface of a shared-party terminal in a form of a card.

In some embodiments, after step 740, the method further includes the following step: transmitting, by the server of the mini program in a case that trip data of the first trip is updated, the updated trip data of the first trip to the at least one shared-party terminal. Correspondingly, the shared-party terminal receives the updated trip data of the first trip transmitted by the server, and updates the display of the shared information of the first trip according to the updated trip data.

For example, if the first user account modifies partial information of the first trip, the server of the mini program receives update information of the initiator terminal, determines the updated trip data of the first trip according to the update information, and transmits the updated trip data to the at least one shared-party terminal. The shared-party terminal receives the updated trip data, and displays updated information in the trip card. If the trip data of the first trip is subsequently updated again, the trip card updates the trip data synchronously.

Through the foregoing manner, the shared information of the first trip displayed by the shared-party terminal can present the latest trip data (information such as an updated departure time, destination, number of remaining seats, and number of available seats) of the first trip. The second user can intuitively and effectively determine, according to the shared information, whether to participate in the first trip, so that user operations can be simplified and user experience can be improved.

Step S10: The social application of the second terminal device calls a mini program of the second terminal device in response to the sharing card of the first trip being clicked/tapped.

Step S11: The mini program of the second terminal device transmits a trip viewing request to the server of the mini program, the trip viewing request being used for indicating that the second user account requests to view detailed information of the first trip.

In some embodiments, the trip viewing request carries the ID of the first trip and the second user account.

Step S12: The server of the mini program verifies whether the second user account and the first user account have matching identity tags.

Step S13: In a case that the second user account and the first user account have matching identity tags, the server of the mini program transmits the detailed information of the first trip to the mini program of the second terminal device, the second user account that has an identity tag matching an identity tag of the first user account having permission to participate in the first trip.

In some embodiments, the server of the mini program detects whether the first user account and the second user account have a matching binding relationship. At least two user accounts that have the matching binding relationship have matching identity tags.

If the first user account and the second user account have the matching binding relationship, the server of the mini program determines that the second user account has permission to participate in the first trip. For example, if the first user account and the second user account have participated in historical trips created by each other, and a matching binding relationship between the first user account and the second user account has been stored in the server; or if the second user account participates in the first trip, then exits the first trip, and then participates in the first trip again, it may be directly determined that the second user account has permission to participate. That is, in some embodiments, once the second user account has participated in the first trip, regardless whether the first trip is completed or the second user account thereafter exits the first trip, the matching binding relationship between the first user account and the second user account is stored in the server.

If the first user account and the second user account do not have the matching binding relationship, the server of the mini program determines, according to the identity tag of the first user account and the identity tag of the second user account, whether the second user account has permission to participate in the first trip.

In some embodiments, that the server of the mini program determines, according to the identity tag of the first user account and the identity tag of the second user account, whether the second user account has permission to participate in the first trip includes the following two possible implementations. In one possible implementation, the server obtains the identity tag of the first user account and the identity tag of the second user account. If the identity tag of the first user account matches the identity tag of the second user account, the server determines that the second user account has permission to participate in the first trip. In the other possible implementation, the server sends an identity matching request to a third-party server. The identity matching request is used for requesting to query whether the identity tag of the first user account matches the identity tag of the second user account. The server receives an identity matching result from the third-party server. If the identity matching result indicates that the identity tag of the first user account matches the identity tag of the second user account, the server determines that the second user account has permission to participate in the first trip.

For example, if the identity tag of the first user account and the identity tag of the second user account are stored in the server or stored in a database corresponding to the server, when determining whether the identity tag of the first user account matches the identity tag of the second user account, the server may directly pull the stored identity tags from the server locally or the database for matching detection. If the identity tag of the first user account and the identity tag of the second user account are not stored in the server, for example, are stored in a third-party server due to privacy issues, when performing matching on the identity tag of the first user account and the identity tag of the second user account, the server needs to transmit the identity matching request to the third-party server. The third-party server performs matching detection on the identity tags, and feeds back an identity matching result to the server. The server determines, according to the fed back result, whether the second user account has permission to participate in the first trip.

Step S14: The mini program of the second terminal device displays a details presentation interface, the details presentation interface including the detailed information of the first trip.

In some embodiments, in a case that the second user account has an identity tag matching an identity tag of the first user account, the server further transmits identity matching related information to the shared-party terminal. The identity matching related information includes at least one of the following: the matching identity tags of the second user account and the first user account, or a matching degree between the identity tags of the second user account and the first user account. The shared-party terminal displays the identity matching related information during the display of the detailed information of the first trip.

In some embodiments, as shown in FIG. 7, after step S14, the method further includes the following steps S15 to S18:
Step S15: The mini program of the second terminal device transmits trip confirmation information to the server of the mini program, the trip confirmation information being used for indicating that the second user account confirms participation in the first trip.
Step S16: The server of the mini program stores a binding relationship between the second user account and the first trip.

After receiving the trip confirmation information of the second user account, the server of the mini program binds the second user account to the first trip created by the first user account and generates information about the binding relationship. For example, the server stores identification information of the first trip, the first user account, and the second user account that confirms participation in the first trip in correspondence.

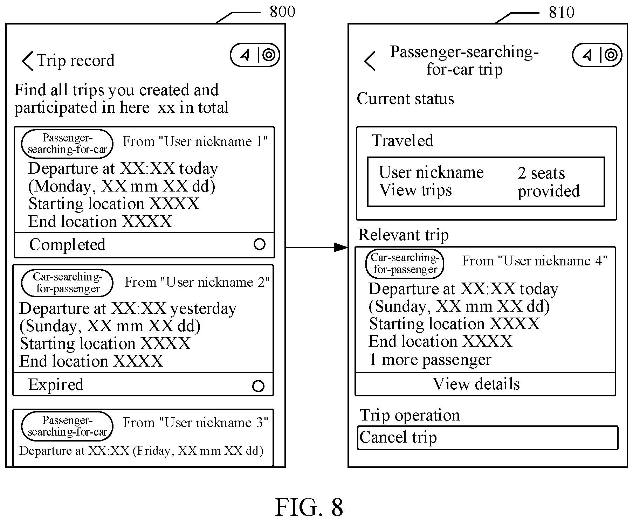

For example, with reference to FIG. 8, after the server of the mini program stores the binding relationship between the first trip of the first user account and the second user account, both clients of the first user account and the second user account display a trip recording interface 800 in FIG. 8. The trip recording interface 800 displays all trips that including the user account. All the trips include a completed trip, a canceled trip, an expired trip, an uncompleted trip, and the like. A user may enter a trip information interface of any trip, such as a passenger-for-car trip interface 810 shown in FIG. 8. The passenger-for-car trip interface 810 displays detailed information of the trip, which may include information indicating whether the trip is completed, trip identification information, trip operation information, or the like.

Step S17: The server of the mini program transmits trip response information to the mini program of the first terminal device.

Step S18: The server of the mini program transmits a trip confirmation response to the mini program of the second terminal device.

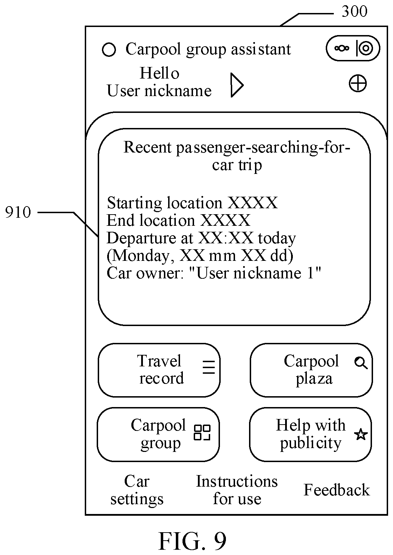

For example, with reference to FIG. 9, if the user account currently has an ongoing first trip, a home interface 300 may be shown in FIG. 9. The home interface 300 displays a trip state card 910. The trip state card 910 may prompt the user about a progress status of the ongoing first trip.

According to the technical solution provided in this embodiment, when checking whether the second user account has permission to participate in the first trip, the server of the mini program preferentially detects whether the first user account and the second user account have a matching binding relationship. If there is a matching binding relationship, it can be directly determined that the second user account has permission to participate in the first trip, without the need for identity tag matching verification. This improves the efficiency of permission verification and helps reduce processing overheads of the server.

In addition, the server can perform identity tag matching verification locally or through a third-party server, thereby improving the flexibility of identity tag matching verification and making the solution more versatile.

In some embodiments, after the trip presentation instruction is transmitted to the mini program through the social application in response to the viewing operation for the shared information, a prompt interface of the mini program is displayed in a case that the mini program determines that the second user account has no permission to participate in the first trip. The prompt interface displays first prompt information. The first prompt information is used for indicating that the second user account has no permission to participate in the first trip.

The viewing operation for the shared information is performed by the second user account for viewing the detailed information of the first trip created by the first user account. The terminal device displays the prompt interface for the second user account having no viewing permission. The first prompt information may directly prompt that the second user account has no permission to participate in the first trip, or may prompt that the second user account has no identity tag matching the identity tag of the first user account, or may display a matching degree between identity tags of the second user account and the first user account and prompt that the second user account does not reach a required matching degree, and so on.

In some embodiments, the prompt interface also displays an information update portal. The information update portal is used for updating identity information by the second user account that has no permission to participate in the first trip. After the second user account updates the identity information thereof, if the updated identity information includes an identity tag matching the identity tag of the first user account, the second user account has permission to participate in the first trip.

In some embodiments, the shared-party terminal displays an information update interface in response to an operation for the information update portal. The shared-party terminal obtains, through the mini program, updated identity information of the second user account submitted in the information update interface. The shared-party terminal transmits an identity update request to the server of the mini program through the mini program. The identity update request includes the updated identity information of the second user account. The identity update request is used for requesting the server of the mini program to update the identity tag of the second user account according to the updated identity information of the second user account. Correspondingly, after receiving the identity update request, the server may update the identity tag of the second user account according to the updated identity information of the second user account.

In some embodiments, after updating the identity tag of the second user account, the server of the mini program may re-determine, according to the identity tag of the first user account and the identity tag of the second user account (updated), whether the second user account has permission to participate in the first trip. If determining that the second user account has permission to participate in the first trip, the server transmits the detailed information of the first trip to the shared-party terminal.

Through the foregoing manner, the second user can directly update the identity information thereof in the prompt interface when the second user has no permission to participate in the first trip. This provides a channel for updating identity information and is convenient and efficient.

In some embodiments, the server of the mini program transmits, through the server of the social application, group invitation information to the at least two user accounts having the matching binding relationship, the group invitation information being used for inviting the at least two user accounts having the matching binding relationship to join a second group of the social application, and the at least two user accounts that have the matching binding relationship having matching identity tags. In some embodiments, if the at least two user accounts having the matching binding relationship include the second user account, the shared-party terminal receives, through the social application, the group invitation information transmitted by the server of the social application, and displays joining prompt information for the second group according to the group invitation information, the joining prompt information being used for guiding the second user account to join the second group.

If there is a matching binding relationship between at least two user accounts in the server, the server of the mini program transmits group invitation information to the at least two user accounts through the server of the social application to invite them to join the second group. A user may choose to join a group with a matching identity tag. If a user account has a newly established matching binding relationship with any one of the at least two user accounts, the server of the mini program transmits the group invitation information to the user account based on the matching identity tag to guide the user to choose to join the existing second group, to continuously expand the number of people in the group to facilitate subsequent information sharing.

For example, it is supposed that a matching binding relationship is formed between the second user account and the first user account during the participation in the current first trip. If the first user account has not joined any group with a matching identity tag between the first user account and the second user account, the first user account may first create a group with the identity tag together with the second user account. If the first user account has joined a group with a matching identity tag between the first user account and the second user account, the server of the mini program may transmit invitation information for the group to the second user account to invite the second user account to join the group.

Through the foregoing manner, the server proactively causes a plurality of users with matching identity tags to join the same group, thereby aggregating some users with the same or similar identity tags. When subsequently sharing a trip created by the user, the user can share the trip to the group. This helps improve a response speed and a success rate of the trip being participated by another user.

In some embodiments, the shared-party terminal displays a user interface related to a first group in the social application; and displays a trip presentation interface of the mini program in response to a mini-program opening operation initiated in the user interface related to the first group, the trip presentation interface displaying a trip created by a user account in the first group.

The first group may be any group in the social application, and the second user account has joined the first group and can view an interface related to the first group. The user interface related to the first group may be a chat session interface, a function menu interface, a group information presentation interface, or the like of the first group. This is not limited in this application. For example, the chat session interface of the first group displays a link message related to the mini program, or the function menu interface or the group information presentation interface of the first group displays a program icon related to the mini program. The second user may click/tap on the link message or the program icon to open the mini program, and trigger displaying of the trip creation interface of the mini program. In some embodiments, the trip presentation interface is directly displayed after the mini program is opened. In some embodiments, a home interface is displayed after the mini program is opened, and the second user triggers opening of the trip presentation interface after performing some operations in the mini program. The second user may view, in the trip presentation interface, the trip created by the user account in the first group. The trip may include at least one of a to-be-matched trip, a matched trip, or a completed trip.

Through the foregoing manner, it can be considered that the second user views a trip in the first group. At this time, only the trip created by the user account in the first group is presented to the second user, and a trip created by another user account not in the first group is not presented. In this way, if a user needs to view a trip created by a user in a group, the user only needs to simply open the mini program in the group and then view the corresponding trip. This operation is simple and efficient.

In some embodiments, to-be-matched trips from at least two different third-party applications are displayed in a trip aggregation interface of the mini program, the to-be-matched trip being a trip waiting for participation by a user. The trip details interface of the mini program is displayed in response to a viewing operation for the to-be-matched trip, the trip details interface displaying detailed information of the to-be-matched trip and the trip participation control.

The trip aggregation interface of the mini program allows a to-be-matched trip of a third-party application to be displayed therein, and to-be-matched trips from at least two different third-party applications can be displayed. When the second user with the matching identity tag views detailed information of a first trip from the third-party application, the detailed information of the first trip can be directly displayed in the trip details interface of the mini program, or the third-party application may be jumped to and the detailed information of the first trip is viewed in a trip details interface of the third-party application. The second user may choose to participate in the first trip through the trip participation control in the trip details interface.

In the foregoing manner, the amount of trip information in the mini program is more extensive, the user can be provided with more travel options and more opportunities for collaborative travels. In addition, on the basis of a platform of the mini program, it can be ensured that a user participating in the first trip is on a relationship chain thereof, thereby ensuring security.

In some embodiments, the initiator terminal obtains trip data of the first trip through the mini program by using an asynchronous task; and generates the shared information of the first trip according to the trip data of the first trip, the shared information of the first trip being displayed in the social application in a form of a card; and transmits the shared information of the first trip to at least one second user account based on a relationship chain in the social application.

The asynchronous task refers to creating one or more side tasks during the execution of a main task. This can improve task execution efficiency. For example, when executing a main task of sharing the first trip with at least one shared-party terminal, the initiator terminal may use an asynchronous task, and requests the server to obtain related trip data of the first trip. For example, a plurality of different asynchronous tasks may be created to obtain a plurality of pieces of different trip data, thereby maximizing the usage of processor performance and improving task execution efficiency.

The trip information of the first trip may not be completely displayed on the trip card. One or more pieces of data in the data of the first trip may be displayed. For example, when only one piece of data is displayed, a departure time may be displayed only, or a starting location may be displayed only, or a trip type may be displayed only, and so on, allowing the second user to learn from this piece of data that the first user is initiating a first trip. When a plurality of pieces of data are displayed, the second user may be allowed to obtain more trip information when seeing the trip card, thereby improving the probability that the second user clicks/taps on the trip card to view detailed information.

Herein, trip cards in different trip creation situations may be presented with different card background images in a session. With reference to FIG. 4, a car-for-passenger trip card 401 may be set as a blue background image, and a passenger-for-car trip card 402 may be set as a yellow background image. The card background image may be a solid color background image, or may be a background image with a pattern, or may be a background image with a pattern changing according to festivals and solar terms. This is not limited in this application.

The trip cards are not necessarily of the same size in the display interface of the initiator terminal and the display interface of the shared-party terminal. A size of a trip card presented on a terminal device may be calculated dynamically according to device information such as a width and a height or a pixel aspect ratio of the device. For example, a terminal device with a larger screen width and height displays a larger card. In this way, different models of terminal devices are adapted to, thereby ensuring the clarity of text in the cards. In addition, processing of the trip data of the first trip may also be adapted for multi-platform compatibility. For example, the trip data may be processed in different social applications, or the trip data may be processed in different operating systems or different models of terminal devices.

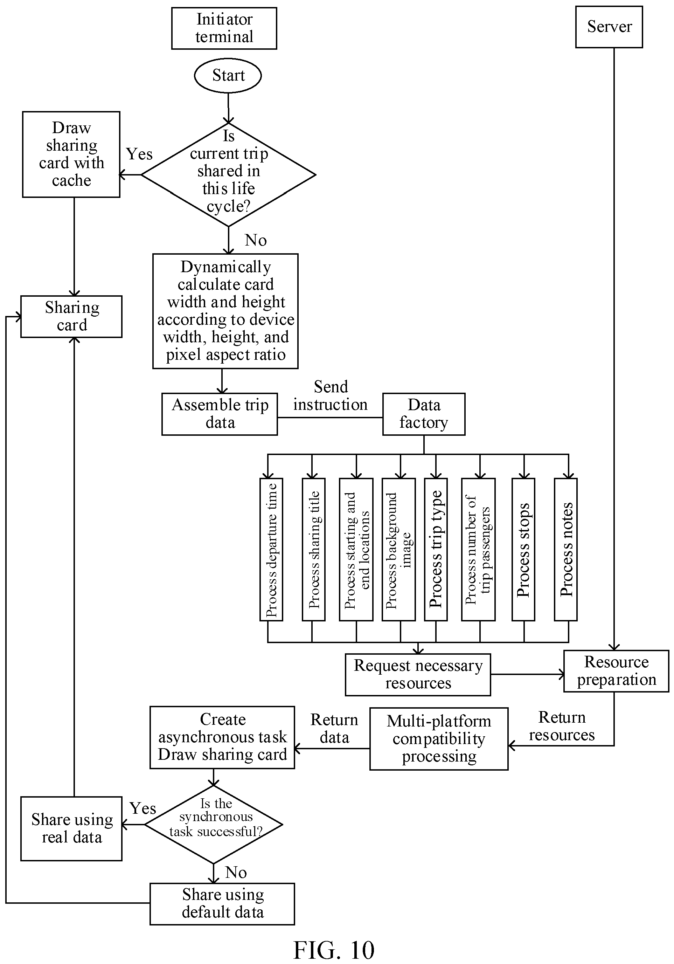

With reference to FIG. 10, a completion time limit may be set for the asynchronous task. For example, the time limit may be set to three seconds. If the time for obtaining the trip data is less than three seconds, the asynchronous task succeeds, and the trip data of the first trip obtained in the asynchronous task may be used to generate a trip card. If the time for obtaining the trip data exceeds three seconds, the asynchronous task fails, and default data cached in the initiator terminal may be used to generate a trip card. The default data may be blank data. In this case, the generated trip card is displayed blank regarding the relevant trip data. The default data may alternatively be preset data. This is not limited in this application.

In some embodiments, before the obtaining, by the initiator terminal, trip data of the first trip through the mini program by using an asynchronous task, the method further includes: in a case that cached data includes the trip data of the first trip, obtaining, by the initiator terminal, the trip data of the first trip from the cached data through the mini program; or in a case that the cached data does not include the trip data of the first trip, performing, by the initiator terminal, the step of obtaining the trip data of the first trip by using an asynchronous task.

With reference to FIG. 10, the trip data of the first trip usually includes information such as a departure time, a sharing title, starting and end locations, a background image, a trip type, the number of passengers in the trip, a stop, and notes. The cached data is stored in the initiator terminal. If the current trip has been shared in this life cycle, the initiator terminal may directly obtain trip data of the shared first trip from the cached data in the initiator terminal, draw a trip card, and share the trip card again. This can simplify information sharing steps and improve processor operating efficiency. If the current trip has not been shared, an asynchronous task needs to be used to request the server of the mini program to obtain trip data. In this asynchronous task, the initiator terminal needs to dynamically calculate, according to a width and a height or a pixel aspect ratio of a terminal device, a size of the trip card presented on the terminal device, process the trip data of the first trip simply, and then transmit a resource preparation request to the server of the mini program, to request the server to enable the trip data to adapt to multi-platform compatibility processing. If the trip data can be fed back to the initiator terminal according to a set rule of the asynchronous task, the asynchronous task is successful.

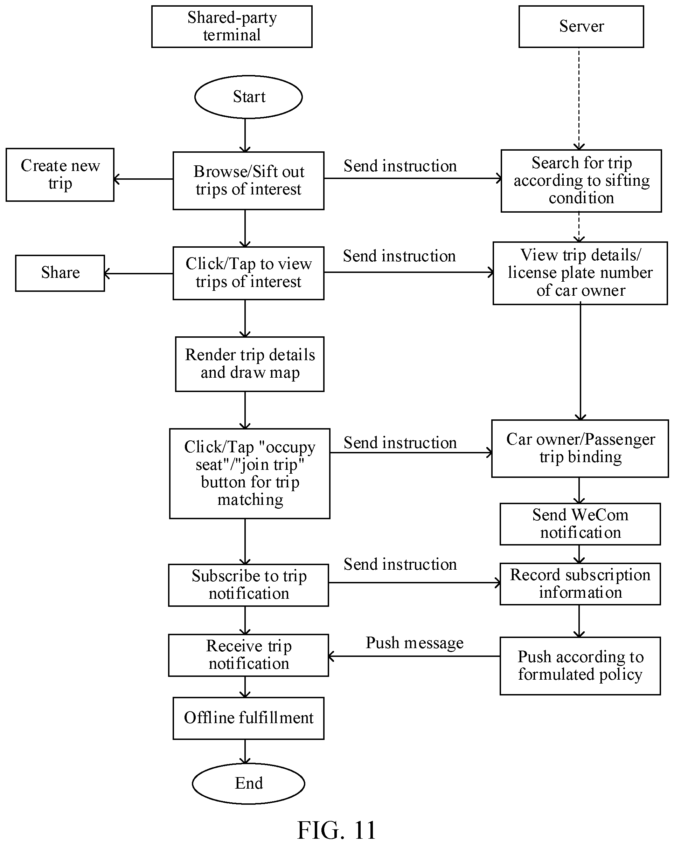

This application provides a solution for sharing a trip in a social application. Referring to FIG. 11, after creating a first trip in a mini program through a server of the mini program, a first user account shares the first trip with a terminal of at least one second user account in a relationship chain of the social application through a server of the social application. Trip information of the first trip is displayed in an interface of the shared-party terminal device in a form of a card. The second user may send a sifting condition to the server of the mini program in an application of the shared-party terminal, and browse trips that the second user is interested in. If no trip meeting a requirement of the second user is sifted out, the second user may independently create a new trip. The second user account may transmit a trip viewing request to the server of the mini program, and verify, through the server of the mini program, whether the initiator and the shared party have matching identity tags. A target second user account that has an identity tag matching an identity tag of the first user account in the at least one second user account has permission to view and participate in the first trip. The matching identity tags may be the same identity tag or may be highly similar identity tags. When a matching degree between the identity tags reaches a preset value, the identity tags of the second user account and the first user account match each other. After determining to participate in the first trip, the second user account may click/tap on an "occupy seat" button or a "join trip" button to participate in trip matching, and transmit, to the server of the mini program, information indicating that the second user account confirms participation in the trip. The server of the mini program stores a binding relationship between the second user account and the first trip, and records trip information of the first trip. On the one hand, the server transmits trip response information to the initiator terminal. On the other hand, the server transmits a trip confirmation response to the shared-party terminal. Within a time period before a departure time of the first trip, the server may transmit a trip notification to a second client to remind the second user to travel according to a scheduled time.

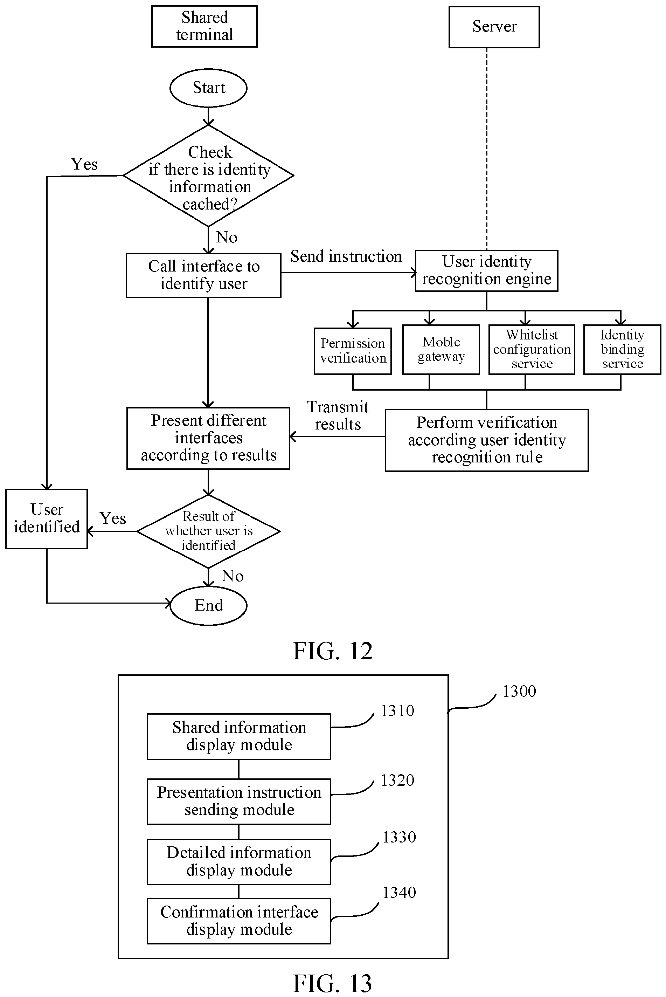

In addition, as shown in FIG. 12, after receiving an instruction from the second user to request to view the detailed information of the first trip, the shared terminal first checks whether identity information is cached locally. If no identity information is cached, the server of the mini program is requested to perform permission verification on the second user account. The server verifies, through a user identity recognition engine, whether the second user account has permission to participate in the first trip. For details of the verification process, refer to the foregoing description. The server feeds back different information to the shared terminal depending on two results of having permission and having no permission. For example, when the second user account has permission, the server feeds back the detailed information of the first trip. When the second user account has no permission, the server feeds back prompt information. The shared terminal performs corresponding displaying according to the result fed back by the server.

In this information sharing solution provided in this application, matching of identity tags is refined. A user can intuitively learn about a matching degree of identity tags through a matching value. This is suitable for the general public and can avoid a problem that another user account participates in the trip without really having the same travel needs, so that both the first user and the second user can achieve true mutual aid in traveling without detouring.

In addition, the advantage of this application is the achievement of true mutual aid in traveling. Because the sharing of information about a mutual aid travel is achieved through a strong relationship chain, only a car owner and a passenger truly in need and offering help can form a final match. The mutual aid travel can reduce the total number of cars on the road, and contribute to environmental protection in the context of "carbon neutrality" and energy conservation and emission reduction, as well as improve the efficiency of urban transportation. The value of mutual service and assistance in life is created between people with the help of social applications, and a better strong relationship chain of users is built through a trip aggregation and matching capability in the mutual aid travel.

In the foregoing method embodiment, the steps performed by the initiator terminal may be separately implemented as an information sharing method on a side of the initiator terminal. The steps performed by the relevant shared-party terminal may be separately implemented as an information sharing method on a side of the shared-party terminal. The steps performed by the relevant server may be separately implemented as an information sharing method on a side of the server.

The following describes apparatus embodiments of this application, which can be used for performing the method embodiments of this application. For details not disclosed in the apparatus embodiments of this application, refer to the method embodiments of this application.

Referring to FIG. 13, FIG. 13 is a block diagram of an information sharing apparatus according to an embodiment of this application. The apparatus has a function of implementing an example of the method on a second terminal side. The function may be implemented by hardware or may be implemented by hardware executing corresponding software. The apparatus may be a terminal device or may be disposed in a terminal device. For example, the terminal device may be the second terminal device described above. A social application and a mini program running based on the social application are run in the second terminal device. The apparatus 1300 may include a shared information display module 1310, a presentation instruction sending module 1320, a detailed information display module 1330, and a confirmation interface display module 1340.

The shared information display module 1310 is configured to display, in a display interface of a social application, shared information of a first trip created by a first user account in a mini program, the first trip being a trip created by a car owner and waiting for participation by a passenger or a trip created by a passenger and waiting for participation by a car owner, and the first trip being shared by the first user account with at least one second user account based on a relationship chain in the social application.

The presentation instruction sending module 1320 is configured to transmit a trip presentation instruction to the mini program through the social application in response to a viewing operation for the shared information.

The detailed information display module 1330 is configured to display a trip details interface of the mini program in a case that the mini program determines, after receiving the trip presentation instruction, that the second user account has permission to participate in the first trip, the trip details interface displaying detailed information of the first trip and a trip participation control, and a target second user account that has an identity tag matching an identity tag of the first user account in the at least one second user account having permission to participate in the first trip.

The confirmation interface display module 1340 is configured to display a trip confirmation interface of the mini program in response to an operation for the trip participation control, the trip confirmation interface displaying trip information of the participated first trip.

In some embodiments, the detailed information display module 1330 is configured to: transmit a trip viewing request to a server of the mini program through the mini program, the trip viewing request being used for indicating that the second user account requests to view detailed information of the first trip; receive, through the mini program, detailed information of the first trip and identity matching related information transmitted by the server of the mini program, the detailed information of the first trip being transmitted in a case that the second user account has an identity tag matching an identity tag of the first user account; and the identity matching related information including at least one of the following: the matching identity tags of the second user account and the first user account, or a matching degree between the identity tags of the second user account and the first user account; and display the trip details interface through the mini program, and display the detailed information of the first trip, the trip participation control, and the identity matching related information in the trip details interface.

In some embodiments, the presentation instruction sending module 1320 is further configured to: display a prompt interface of the mini program in a case that the mini program determines that the second user account has no permission to participate in the first trip, the prompt interface displaying first prompt information and an information update portal, and the first prompt information being used for indicating that the second user account has no permission to participate in the first trip; display an information update interface of the mini program in response to an operation for the information update portal; obtain, through the mini program, updated identity information of the second user account submitted in the information update interface; and transmitting an identity update request to a server of the mini program through the mini program, the identity update request including the updated identity information of the second user account, and the identity update request being used for requesting the server of the mini program to update the identity tag of the second user account according to the updated identity information of the second user account.

In some embodiments, the shared information display module 1310 is further configured to: receive, through the social application, updated shared information of the first trip transmitted by a server of the social application, the updated shared information of the first trip being provided by a server of the mini program to the server of the social application, and the updated shared information of the first trip including updated trip data of the first trip; and display the updated shared information of the first trip in the display interface of the social application.

In some embodiments, the apparatus 1300 further includes: an invitation information receiving module and a prompt information display module (not shown in FIG. 13). The invitation information receiving module is configured to receive, through the social application, group invitation information transmitted by a server of the social application, the group invitation information being used for inviting at least two user accounts with a matching binding relationship to join a second group of the social application, the at least two user accounts with the matching binding relationship having matching identity tags, and the at least two user accounts with the matching binding relationship including the second user account. The prompt information display module is configured to display joining prompt information for the second group through the social application according to the group invitation information, the joining prompt information being used for guiding the second user account to join the second group.

In some embodiments, the apparatus 1300 further includes: a to-be-matched-trip display module and a details interface display module (not shown in FIG. 13). The to-be-matched-trip display module is configured to display to-be-matched trips from at least two different third-party applications in a trip aggregation interface of the mini program, the to-be-matched trip being a trip waiting for participation by a user. The details interface display module is configured to display the trip details interface of the mini program in response to a viewing operation for the to-be-matched trip, the trip details interface displaying detailed information of the to-be-matched trip and the trip participation control.

In some embodiments, the apparatus 1300 further includes: a first user interface display module and a presentation interface display module (not shown in FIG. 13). The first user interface display module is configured to display a user interface related to a first group in the social application. The presentation interface display module is configured to display a trip presentation interface of the mini program in response to a mini-program opening operation initiated in the user interface related to the first group, the trip presentation interface displaying a trip created by a user account in the first group.

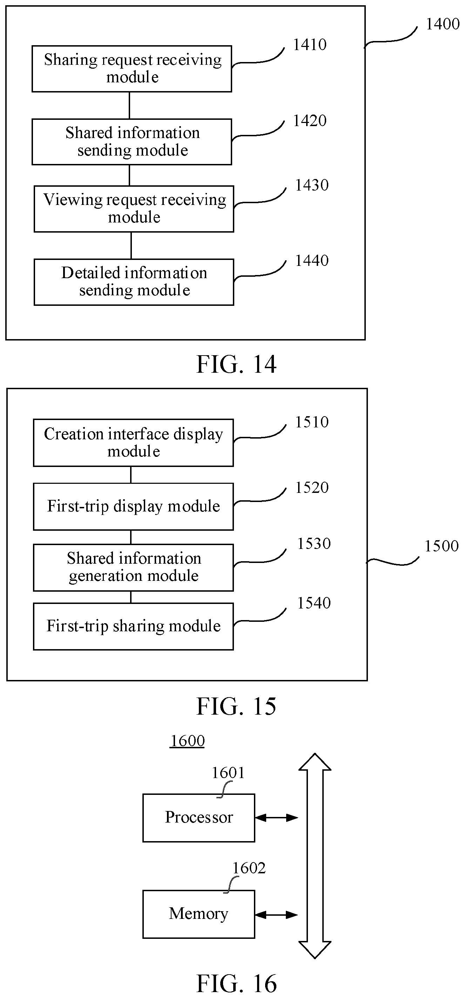

Referring to FIG. 14, FIG. 14 is a block diagram of an information sharing apparatus according to another embodiment of this application. The apparatus has a function of implementing an example of the method on a server side. The function may be implemented by hardware or may be implemented by hardware executing corresponding software. The apparatus may be a server or may be disposed in a server. For example, the server may be the backend server described above, including a server of a social application and a server of a mini program. The apparatus 1400 may include a sharing request receiving module 1410, a shared information sending module 1420, a viewing request receiving module 1430, and a detailed information sending module 1440.

The sharing request receiving module 1410 is configured to receive, through a server of a social application, an information sharing request transmitted by a social application of a first terminal device, the information sharing request being used for requesting to share, based on a relationship chain in the social application, a first trip created by a first user account corresponding to the first terminal device in a mini program, and the first trip being a trip created by a car owner and waiting for participation by a passenger or a trip created by a passenger and waiting for participation by a car owner.

The shared information sending module 1420 is configured to transmit, through the server of the social application, shared information of the first trip to a social application of at least one second terminal device according to the information sharing request, the second terminal device being corresponding to a second user account, and the second user account being determined based on the relationship chain in the social application.

The viewing request receiving module 1430 is configured to receive, through the server of the mini program, a trip viewing request transmitted by a mini program of the second terminal device, the trip viewing request being used for indicating that the second user account requests to view detailed information of the first trip.

The detailed information sending module 1440 is configured to transmit, through the server of the mini program, the detailed information of the first trip to the mini program of the second terminal device in a case that the second user account has an identity tag matching an identity tag of the first user account, the second user account that has the identity tag matching the identity tag of the first user account having permission to participate in the first trip.

In some embodiments, the apparatus 1400 further includes an identity verification module (not shown in FIG. 14), configured to: determine, through the server of the mini program, that the second user account has permission to participate in the first trip in a case that the first user account and the second user account have a matching binding relationship, at least two user accounts that have the matching binding relationship having matching identity tags; and determine, through the server of the mini program according to an identity tag of the first user account and an identity tag of the second user account, whether the second user account has permission to participate in the first trip in a case that the first user account and the second user account do not have the matching binding relationship.

In some embodiments, the identity verification module is configured to: obtain, through the server of the mini program, the identity tag of the first user account and the identity tag of the second user account, and determine, through the server of the mini program, that the second user account has permission to participate in the first trip in a case that the identity tag of the first user account matches the identity tag of the second user account; or transmit, through the server of the mini program, an identity matching request to a third-party server, the identity matching request being used for requesting to query whether the identity tag of the first user account matches the identity tag of the second user account; receive, through the server of the mini program, an identity matching result from the third-party server; and determine, through the server of the mini program, that the second user account has permission to participate in the first trip in a case that the identity matching result indicates that the identity tag of the first user account matches the identity tag of the second user account.

In some embodiments, the detailed information sending module 1440 is further configured to: receive, through the server of the mini program, trip confirmation information transmitted by the mini program of the second terminal device, the trip confirmation information being used for indicating that the second user account confirms participation in the first trip; and store, through the server of the mini program, a binding relationship between the second user account and the first trip.

In some embodiments, the apparatus 1400 further includes an indication information sending module and an invitation information sending module (not shown in FIG. 14). The indication information sending module is configured to transmit, through the server of the mini program, relationship indication information to the server of the social application, the relationship indication information being used for indicating at least two user accounts having a matching binding relationship, and the at least two user accounts that have the matching binding relationship having matching identity tags. The invitation information sending module is configured to transmit, through the server of the social application, group invitation information to the at least two user accounts having the matching binding relationship, the group invitation information being used for inviting the at least two user accounts having the matching binding relationship to join a second group of the social application.

Referring to FIG. 15, FIG. 15 is a block diagram of an information sharing apparatus according to another embodiment of this application. The apparatus has a function of implementing an example of the method on an initiator terminal side. The function may be implemented by hardware or may be implemented by hardware executing corresponding software. The apparatus may be a terminal device or may be disposed in a terminal device. For example, the terminal device may be the first terminal device described above. A social application and a mini program running based on the social application are run in the first terminal device. The apparatus 1500 may include a creation interface display module 1510, a first information display module 1520, a shared information generation module 1530, and a first information sharing module 1540.

The creation interface display module 1510 is configured to display a trip creation interface of a mini program through the social application.

The first information display module 1520 is configured to display, through the mini program in response to an operation for the trip creation interface, a first trip created by a first user account, the first trip being a trip created by a car owner and waiting for participation by a passenger or a trip created by a passenger and waiting for participation by a car owner.

The shared information generation module 1530 is configured to: in response to a sharing operation for the first trip, generate shared information of the first trip through the mini program, and provide the shared information of the first trip to the social application.

The first information sharing module 1540 is configured to transmit the shared information of the first trip to at least one second user account through the social application based on a relationship chain in the social application, a target second user account that has an identity tag matching an identity tag of the first user account in the at least one second user account having permission to participate in the first trip.

In some embodiments, the shared information generation module 1530 is configured to: obtain trip data of the first trip through the mini program by using an asynchronous task; and generate the shared information of the first trip through the mini program according to the trip data of the first trip, the shared information of the first trip being displayed in the social application in a form of a card.

In some embodiments, the shared information generation module 1530 is further configured to: in a case that cached data of the first terminal device includes the trip data of the first trip, obtain the trip data of the first trip from the cached data through the mini program; or in a case that the cached data does not include the trip data of the first trip, perform the operation of obtaining trip data of the first trip through the mini program by using an asynchronous task.

In some embodiments, the apparatus further includes a second user interface display module, a trip creation interface display module, and a first information display module (not shown in FIG. 15). The second user interface display module is configured to display a user interface related to a second group in the social application. The trip creation interface display module is configured to display the trip creation interface of the mini program in response to a mini-program opening operation initiated in the user interface related to the second group. The first information display module is configured to display, through the mini program in response to the operation for the trip creation interface, the first trip created by the first user account, a user account that belongs to the second group having permission to participate in the first trip, and a user account that does not belong to the second group having no permission to participate in the first trip.

When the apparatus provided in the foregoing embodiment implements the functions of the apparatus, only division of the foregoing function modules is used as an example for description. In the practical application, the functions may be allocated to and completed by different function modules according to requirements. That is, an internal structure of the device is divided into different function modules to complete all or some of the functions described above. In addition, the apparatus provided in the foregoing embodiment is based on the same concept as the method embodiment. For details of a specific implementation process of the apparatus, refer to the method embodiment. Details are not described herein again.

Referring to FIG. 16, FIG. 16 is a structural block diagram of a computer device 1600 according to an embodiment of this application. The computer device 1600 may be the terminal device described above or may be a server.

Usually, the computer device 1600 includes a processor 1601 and a memory 1602.

The processor 1601 may include one or more processing cores, for example, a 4-core processor or an 8-core processor. The processor 1601 may be implemented in at least one hardware form of a digital signal processor (DSP), a field-programmable gate array (FPGA), and a programmable logic array (PLA). The processor 1601 may also include a main processor and a coprocessor. The main processor is a processor configured to process data in an awake state, and is also referred to as a central processing unit (CPU). The coprocessor is a low power consumption processor configured to process data in a standby state. In some embodiments, the processor 1601 may be integrated with a graphics processing unit (GPU). The GPU is configured to render and draw content that needs to be displayed on a display screen. In some embodiments, the processor 1601 may further include an artificial intelligence (AI) processor. The AI processor is configured to process computing operations related to machine learning.

The memory 1602 may include one or more computer-readable storage media. The computer-readable storage medium may be non-transient. The memory 1602 may further include a high-speed random access memory (RAM) and a nonvolatile memory, for example, one or more magnetic disk storage devices or flash storage devices. In some embodiments, the non-transient computer-readable storage medium in the memory 1602 is configured to store a computer program. The computer program is configured to be executed by one or more processors to implement the foregoing information sharing method.

A person skilled in the art may understand that the structure shown in FIG. 16 constitutes no limitation on the computer device 1600, and the computer device may include more or fewer components than those shown in the figure, or some components may be combined, or a different component deployment may be used.

In an exemplary embodiment, a computer-readable storage medium is further provided, storing a computer program, the computer program, when executed by a processor of a computer device, implementing the foregoing information sharing method. In some embodiments, the computer-readable storage medium may be a read-only memory (ROM), a RAM, a compact disc read-only memory (CD-ROM), a magnetic tape, a floppy disk, an optical data storage device, and the like.

In an exemplary embodiment, a computer program product is further provided. The computer program product includes a computer instruction. The computer instruction is stored in a computer-readable storage medium. A processor of a computer device reads the computer instruction from the computer-readable storage medium. The processor executes the computer instruction, so that the computer device performs the foregoing information sharing method.

The information and data involved in this application (including but not limited to user identity information, identity tags, trip data, trip information, and the like) are obtained with the authorization of the user or with the full authorization of all parties. The collection, use, and processing of the relevant information and data need to comply with the relevant laws, regulations, and standards of relevant countries and regions.

It is to be understood that, "a plurality of" mentioned in this specification means two or more. The term "and/or" describes an association relationship between associated objects and represents that three types of relationships may exist. For example, A and/or B may represent the following three cases: only A exists, both A and B exist, and only B exists. The character "/" generally indicates that the associated objects are in an "or" relationship. In addition, the step numbers described in this specification merely exemplarily show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application shall fall within the protection scope of this application.

## Claims

1. An information sharing method, the method executable by a second terminal device, and a social application configured to be run based on an operating system installed in the second terminal device, and a mini program running based on the social application, the method comprising:
displaying, in a display interface of the social application, shared information of a first trip created by a first user account in the mini program, the first trip being a trip created by a car owner and waiting for participation by a passenger or a trip created by a passenger and waiting for participation by a car owner, and the first trip being shared by the first user account with a second user account based on a relationship chain in the social application;
transmitting a trip presentation instruction to the mini program through the social application in response to a viewing operation for the shared information;
displaying a trip details interface of the mini program in response to that the mini program determines, after receiving the trip presentation instruction, that the second user account has permission to participate in the first trip, the trip details interface displaying detailed information and a trip participation control of the first trip, and the second user account having permission to participate in the first trip being determined in response to that the second user account has an identity tag matching an identity tag of the first user account ; and
displaying a trip confirmation interface of the mini program in response to an operation for the trip participation control, the trip confirmation interface displaying trip information of the participated first trip.

2. The method according to claim 1, wherein the identity tag comprises at least one of the following:
a company tag, indicating a company to which a user belongs;
a community tag, indicating a community to which a user belongs; and
a group tag, indicating a group that a user joins in the social application,
wherein the target second user account having the identity tag matching the identity tag of the first user account comprises that the target second user account has at least one same identity tag as the first user account.

3. The method according to claim 1, wherein the displaying a trip details interface of the mini program comprises:
transmitting a trip viewing request to a server of the mini program through the mini program, the trip viewing request indicating that the second user account requests to view the detailed information of the first trip;
receiving, through the mini program, the detailed information of the first trip and identity matching related information transmitted by the server of the mini program, the detailed information of the first trip being transmitted in response to that the second user account has the identity tag matching the identity tag of the first user account; and the identity matching related information comprising at least one of the following: the matching identity tags of the second user account and the first user account, or a matching degree between the identity tags of the second user account and the first user account; and
displaying the trip details interface through the mini program, and displaying the detailed information of the first trip, the trip participation control, and the identity matching related information in the trip details interface.

4. The method according to claim 1, wherein after the transmitting a trip presentation instruction to the mini program through the social application in response to a viewing operation for the shared information, the method further comprises:
displaying a prompt interface of the mini program in response to that the mini program determines, after receiving the trip presentation instruction, that the second user account has no permission to participate in the first trip, the prompt interface displaying first prompt information and an information update portal, and the first prompt information indicating that the second user account has no permission to participate in the first trip;
displaying an information update interface of the mini program in response to an operation for the information update portal;
obtaining, through the mini program, updated identity information of the second user account submitted in the information update interface; and
transmitting an identity update request to a server of the mini program through the mini program, the identity update request comprising updated identity information of the second user account, and the identity update request being used for requesting the server of the mini program to update the identity tag of the second user account according to the updated identity information of the second user account.

5. The method according to claim 1, wherein after the displaying, in a display interface of the social application, shared information of a first trip created by a first user account in the mini program, the method further comprises:
receiving, through the social application, updated shared information of the first trip transmitted by a server of the social application, the updated shared information of the first trip being provided by a server of the mini program to the server of the social application, and the updated shared information of the first trip comprising updated trip data of the first trip; and
displaying the updated shared information of the first trip in the display interface of the social application.

6. The method according to claim 1, further comprising:
receiving, through the social application, group invitation information transmitted by a server of the social application, the group invitation information being used for inviting at least two user accounts that have a matching binding relationship to join a second group of the social application, the at least two user accounts that have the matching binding relationship having matching identity tags, and the at least two user accounts that have the matching binding relationship comprising the second user account; and
displaying joining prompt information for the second group through the social application according to the group invitation information, the joining prompt information being used for guiding the second user account to join the second group.

7. The method according to claim 1, further comprising:
displaying to-be-matched trips from at least two different third-party applications in a trip aggregation interface of the mini program, the to-be-matched trips each being a trip waiting for participation by a user; and
displaying the trip details interface of the mini program in response to a viewing operation for the to-be-matched trips, the trip details interface displaying detailed information of the to-be-matched trips and the trip participation control.

8. The method according to claim 1, further comprising:
displaying a user interface related to a first group in the social application, the first group comprising the second user account; and
displaying a trip presentation interface of the mini program in response to a mini-program opening operation initiated in the user interface related to the first group, the trip presentation interface displaying a trip created by a user account in the first group.

9. An information sharing method, the method being performed by backend servers, and the backend servers comprising a server of a social application configured to be run based on an operating system installed in a terminal device, and a server of a mini program running based on the social application; the method comprising:
receiving, by the server of the social application, an information sharing request transmitted by a social application of a first terminal device, the information sharing request being used for requesting to share, based on a relationship chain in the social application, a first trip created by a first user account corresponding to the first terminal device in the mini program, and the first trip being a trip created by a car owner and waiting for participation by a passenger or a trip created by a passenger and waiting for participation by a car owner;
transmitting, by the server of the social application, shared information of the first trip to a social application of a second terminal device according to the information sharing request, the second terminal device corresponding to a second user account, and the second user account being determined based on the relationship chain in the social application;
receiving, by the server of the mini program, a trip viewing request transmitted by a mini program of the second terminal device, the trip viewing request indicating that the second user account requests to view detailed information of the first trip; and
transmitting, by the server of the mini program, the detailed information of the first trip to the mini program of the second terminal device in response to that the second user account has an identity tag matching an identity tag of the first user account, the second user account that has the identity tag matching the identity tag of the first user account having permission to participate in the first trip.

10. The method according to claim 9, wherein after the receiving, by the server of the mini program, a trip viewing request transmitted by a mini program of the second terminal device, the method further comprises:
determining, by the server of the mini program, that the second user account has permission to participate in the first trip in response to that the first user account and the second user account have a matching binding relationship, at least two user accounts that have the matching binding relationship having matching identity tags; or
determining, by the server of the mini program according to the identity tag of the first user account and the identity tag of the second user account, whether the second user account has permission to participate in the first trip in response to that the first user account and the second user account do not have the matching binding relationship.

11. The method according to claim 10, wherein the determining, by the server of the mini program according to the identity tag of the first user account and the identity tag of the second user account, whether the second user account has permission to participate in the first trip comprises:
obtaining, by the server of the mini program, the identity tag of the first user account and the identity tag of the second user account, and determining, by the server of the mini program, that the second user account has permission to participate in the first trip in response to that the identity tag of the first user account matches the identity tag of the second user account;
or
transmitting, by the server of the mini program, an identity matching request to a third-party server, the identity matching request being used for requesting to query whether the identity tag of the first user account matches the identity tag of the second user account; receiving, by the server of the mini program, an identity matching result from the third-party server; and determining, by the server of the mini program, that the second user account has permission to participate in the first trip in response to that the identity matching result indicates that the identity tag of the first user account matches the identity tag of the second user account.

12. The method according to claim 9, wherein after the transmitting, by the server of the mini program, the detailed information of the first trip to the mini program of the second terminal device, the method further comprises:
receiving, by the server of the mini program, trip confirmation information transmitted by the mini program of the second terminal device, the trip confirmation information indicating that the second user account confirms participation in the first trip; and
storing, by the server of the mini program, a binding relationship between the second user account and the first trip.

13. The method according to claim 9, further comprising:
transmitting, by the server of the mini program, relationship indication information to the server of the social application, the relationship indication information indicating at least two user accounts that have a matching binding relationship, and the at least two user accounts that have the matching binding relationship having matching identity tags; and
transmitting, by the server of the social application, group invitation information to the at least two user accounts that have the matching binding relationship, the group invitation information being used for inviting the at least two user accounts that have the matching binding relationship to join a second group of the social application.

14. An information sharing method, executable by a first terminal device, a social application being configured to be run based on an operating system installed in the first terminal device, and a mini program running based on the social application; the method comprising:
displaying a trip creation interface of the mini program through the social application;
displaying, through the mini program in response to an operation for the trip creation interface, a first trip created by a first user account, the first trip being a trip created by a car owner waiting for participation by a passenger or a trip created by a passenger waiting for participation by a car owner;
in response to a sharing operation for the first trip, generating shared information of the first trip through the mini program, and providing the shared information of the first trip to the social application; and
transmitting the shared information of the first trip to a second user account through the social application based on a relationship chain in the social application, the second user account having an identity tag matching an identity tag of the first user account and permission to participate in the first trip.

15. The method according to claim 14, wherein the generating shared information of the first trip through the mini program comprises:
obtaining trip data of the first trip through the mini program by an asynchronous task; and
generating the shared information of the first trip through the mini program according to the trip data of the first trip, the shared information of the first trip being displayed in the social application in a form of a card.

16. The method according to claim 15, wherein before the obtaining trip data of the first trip through the mini program by using an asynchronous task, the method further comprises:
in response to that cached data of the first terminal device comprises the trip data of the first trip, obtaining the trip data of the first trip from the cached data through the mini program; or
in response to that the cached data does not comprise the trip data of the first trip, performing the operation of obtaining trip data of the first trip through the mini program by the asynchronous task.

17. The method according to claim 14, further comprising:
displaying a user interface related to a second group in the social application;
displaying the trip creation interface of the mini program in response to a mini-program opening operation initiated in the user interface related to the second group; and
displaying, through the mini program in response to the operation for the trip creation interface, the first trip created by the first user account, a user account that belongs to the second group having permission to participate in the first trip, and a user account that does not belong to the second group having no permission to participate in the first trip.

18. An information sharing apparatus, comprising:
a shared information display module, configured to display, in a display interface of a social application, shared information of a first trip created by a first user account in a mini program, the first trip being a trip created by a car owner and waiting for participation by a passenger or a trip created by a passenger and waiting for participation by a car owner, and the first trip being shared by the first user account with a second user account based on a relationship chain in the social application;
a presentation instruction sending module, configured to transmit a trip presentation instruction to the mini program through the social application in response to a viewing operation for the shared information;
a detailed information display module, configured to display a trip details interface of the mini program in response to that the mini program determines, after receiving the trip presentation instruction, that the second user account has permission to participate in the first trip, the trip details interface displaying detailed information and a trip participation control of the first trip, the second user account having the permission to participate in the first trip being determined in response that the second user account has an identity tag matching an identity tag of the first user account; and
a confirmation interface display module, configured to display a trip confirmation interface of the mini program in response to an operation for the trip participation control, the trip confirmation interface displaying trip information of the participated first trip.

19. An information sharing apparatus, comprising:
a sharing request receiving module, configured to receive, through a server of a social application, an information sharing request transmitted by a social application of a first terminal device, the information sharing request being used for requesting to share, based on a relationship chain in the social application, a first trip created by a first user account corresponding to the first terminal device in a mini program, and the first trip being a trip created by a car owner waiting for participation by a passenger or a trip created by a passenger waiting for participation by a car owner;
a shared information sending module, configured to transmit, through the server of the social application, shared information of the first trip to a social application of a second terminal device according to the information sharing request, the second terminal device corresponding to a second user account, and the second user account being determined based on the relationship chain in the social application;
a viewing request receiving module, configured to receive, through a server of the mini program, a trip viewing request transmitted by a mini program of the second terminal device, the trip viewing request indicating that the second user account requests to view detailed information of the first trip; and
a detailed information sending module, configured to transmit, through the server of the mini program, the detailed information of the first trip to the mini program of the second terminal device in response to that the second user account has an identity tag matching an identity tag of the first user account, the second user account that has the identity tag matching the identity tag of the first user account having permission to participate in the first trip.

20. An information sharing apparatus, comprising:
a creation interface display module, configured to display a trip creation interface of a mini program through a social application;
a first information display module, configured to display, through the mini program in response to an operation for the trip creation interface, a first trip created by a first user account, the first trip being a trip created by a car owner and waiting for participation by a passenger or a trip created by a passenger and waiting for participation by a car owner;
a shared information generation module, configured to: in response to a sharing operation for the first trip, generate shared information of the first trip through the mini program, and provide the shared information of the first trip to the social application; and
a first information sharing module, configured to transmit the shared information of the first trip to a second user account through the social application based on a relationship chain in the social application, the second user account having an identity tag matching an identity tag of the first user account and permission to participate in the first trip.

21. A computer device, comprising a processor and a memory, the memory storing a computer program, and the computer program being loaded and executed by the processor to implement the information sharing method according to any one of claims 1 to 8, or to implement the information sharing method according to any one of claims 9 to 13, or to implement the information sharing method according to any one of claims 14 to 17.

22. A computer-readable storage medium, storing a computer program, the computer program being loaded and executed by a processor to implement the information sharing method according to any one of claims 1 to 8, or to implement the information sharing method according to any one of claims 9 to 13, or to implement the information sharing method according to any one of claims 14 to 17.

23. A computer program product, comprising a computer program, the computer program being loaded and executed by a processor to implement the information sharing method according to any one of claims 1 to 8, or to implement the information sharing method according to any one of claims 9 to 13, or to implement the information sharing method according to any one of claims 14 to 17.
